(19) **Europäisches Patentamt / European Patent Office / Office européen des brevets**

(11) **EP 4 727 045 A1**

(12) **EUROPEAN PATENT APPLICATION**
published in accordance with Art. 153(4) EPC

(43) Date of publication:
**15.04.2026 Bulletin 2026/16**

(21) Application number: **24822539.3**

(22) Date of filing: **29.05.2024**

(51) International Patent Classification (IPC):
**H04L 1/06** (2006.01)

(52) Cooperative Patent Classification (CPC):
**H04L 1/06; H04W 28/06**

(86) International application number:
**PCT/CN2024/095923**

(87) International publication number:
**WO 2024/255587 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.06.2023 CN 202310694380**

(71) Applicant: **Apogee Networks, LLC**
**Plano, TX 75024 (US)**

(72) Inventors:
- **WU, Keying**
  **Shanghai 201206 (CN)**
- **ZHANG, Xiaobo**
  **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN NODE FOR WIRELESS COMMUNICATION**

(57) Disclosed in the present application are a method and apparatus used in a node for wireless communication. A first receiver receives first signaling, wherein the first signaling is used for determining N CSI reports, N being a positive integer, and the N CSI reports comprise a first CSI report; and a first transmitter sends a first CSI set, wherein the first CSI set comprises CSI for the N CSI reports; and the first CSI report is used for determining a first RS resource set, the measurement for the first RS resource set is used for determining first pre-compressed CSI, the first pre-compressed CSI serves as an input of a first encoder and is used for generating CSI for the first CSI report, and the priority of the first CSI report depends on the first encoder. The present application reduces system overheads, and improves the performance.

FIG. 1

EP 4 727 045 A1

## Description

## Technical Field

The present application relates to a transmission method and apparatus in a wireless communication system, in particular to a scheme and an apparatus related to Channel State Information (CSI) in the wireless communication system.

## Background Art

In traditional wireless communication, User Equipment (UE) reports may comprise at least one of multiple types of auxiliary information, such as CSI, auxiliary information related to beam management, auxiliary information related to positioning, etc. CSI comprises at least one of CSI-RS Resource Indicator (CRI), Rank Indicator (RI), Precoding Matrix Indicator (PMI) or Channel Quality Indicator (CQI).

A network device selects appropriate transmission parameters, for example, parameters such as a dwell cell, a Modulation and Coding Scheme (MCS), a Transmitted Precoding Matrix Indicator (TPMI), and a Transmission Configuration Indication (TCI), for a UE according to the reports of the UE. In addition, the UE reports can be used for optimizing network parameters, such as for better cell coverage, base station switching according to UE location, etc.

In a New Radio (NR) system, a priority of a CSI report is defined, and the priority is used for determining an order in which the CSI report is omitted.

With the increase in the number of antennas and more stringent requirements for system performance, a traditional PMI feedback mode will bring a large amount of redundant overheads. Therefore, in NR Release (R) 18, CSI compression based on Artificial Intelligence (AI) or Machine Learning (ML) is initiated as a project.

## Summary of the Invention

The inventor has found through research that existing priority schemes may not be able to satisfy new needs for channel information feedback. In view of the above problem, the present application discloses a solution. It should be noted that although a large number of embodiments of the present application are developed for AI/ML, the present application is also applicable to other schemes, such as traditional schemes for CSI reports. In addition, the use of a unified solution for different scenarios (including but not limited to an AI/ML-based scheme and a traditional CSI report scheme) also facilitates the reduction of hardware complexity and costs. In the absence of conflicts, embodiments and features in the embodiments in any node of the present application can be applied to any other nodes. In the absence of conflicts, the embodiments and features in the embodiments of the present application can be arbitrarily combined with each other.

As an embodiment, the interpretation of the terminology in the present application refers to the definitions of TS38 series of 3GPP specification protocols.

As an embodiment, the interpretation of the terminology in the present application refers to the definitions of TS37 series of 3GPP specification protocols.

The present application discloses a method used in a first node for wireless communication, comprising:

receiving first signaling, wherein the first signaling is used for determining N CSI reports, N is a positive integer, and the N CSI reports comprise a first CSI report; and

sending a first CSI set, wherein the first CSI set comprises CSI for the N CSI reports;

wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

As an embodiment, a problem to be solved by the present application comprises: how to determine the priority of the CSI report. The above method makes the determination of the priority depend on the first encoder, which solves this problem.

As an embodiment, the benefits of the above method comprise that: the performance of the CSI report is improved.

As an embodiment, the benefits of the above method comprise that: the excessive overheads of the CSI report are avoided.

As an embodiment, the benefits of the above method comprise that: the accuracy and the overheads of the CSI report can be better balanced, thereby optimizing the system design.

According to an aspect of the present application, wherein the first encoder satisfies at least one of the following:

a channel parameter recovered by a target recipient of the first CSI set based on an output of the first encoder is unknown to the first node;

a channel parameter recovered by the first node based on the output of the first encoder is unknown to the target recipient of the first CSI set;

at least part of parameters of the first encoder are obtained based on training; and

the output of the first encoder does not belong to the CSI defined in 3GPP Rel-17, nor does it belong to the CSI defined in releases prior to 3GPP Rel-17.

As an embodiment, the essence of the above method comprises that: the CSI for the first CSI report carries artificial intelligence- or machine learning-based CSI.

As an embodiment, a problem to be solved by the present application comprises: how to determine a priority of an artificial intelligence- or machine learning-based CSI report. The above method determines the priority of the first CSI report according to the first encoder, which solves this problem.

As an embodiment, the benefits of the above method comprise that: the priority determination of the artificial intelligence- or machine learning-based CSI report is solved.

As an embodiment, the benefits of the above method comprise that: the accuracy and quantity of the CSI report can be better balanced, thereby optimizing the system design.

According to an aspect of the present application, wherein the priority of the first CSI report depends on a first ID, and the first ID is associated with the first encoder.

As an embodiment, the benefits of the above method comprise that: the processing is simplified and the complexity of determining the priority is reduced.

As an embodiment, the benefits of the above method comprise that: it is convenient to enhance formulas for calculating the priority in existing standards to support AI/ML-based CSI.

According to an aspect of the present application, wherein the first pre-compressed CSI serves as an input of the first encoder and is used for generating first compressed CSI, and the priority of the first CSI report depends on a size of the first compressed CSI.

As an embodiment, the essence of the above method comprises: determining the priority of the first CSI report according to a size of a CSI payload; and the above method better balances the accuracy and the overheads of the CSI report and optimizes the overall system performance.

According to an aspect of the present application, wherein the priority of the first CSI report depends on a first parameter, and the first parameter is associated with the first encoder.

As an embodiment, the essence of the above method comprises that: the first parameter is a parameter of the first encoder; and the benefits of the above method comprise that: the priority of the first CSI report is adaptively determined according to a parameter of the first encoder, thereby optimizing the performance of the CSI report.

According to an aspect of the present application, wherein the CSI for the first CSI report comprises a first report quantity, and the first report quantity is used for determining a size of the CSI for the first CSI report.

As an embodiment, the benefits of the above method comprise that: it is ensured that the understanding of the CSI report by the first node and the target recipient of the first CSI set will not cause misunderstanding.

According to an aspect of the present application, wherein the first CSI set is transmitted on a first physical channel, a first threshold depends on a size of resources allocated to the first physical channel, and the first encoder depends on the first threshold.

According to an aspect of the present application, wherein the first node is a user equipment.

According to an aspect of the present application, wherein the first node is a relay node.

The present application discloses a method used in a second node for wireless communication, comprising:

sending first signaling, wherein the first signaling is used for determining N CSI reports, N is a positive integer, and the N CSI reports comprise a first CSI report; and
receiving a first CSI set, wherein the first CSI set comprises CSI for the N CSI reports;
wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

According to an aspect of the present application, wherein the first encoder satisfies at least one of the following:

a channel parameter recovered by the second node based on an output of the first encoder is unknown to a sender of the first CSI set;
a channel parameter recovered by the sender of the first CSI set based on the output of the first encoder is unknown to the second node;
at least part of parameters of the first encoder are obtained based on training; and
the output of the first encoder does not belong to the CSI defined in 3GPP Rel-17, nor does it belong to the CSI defined in releases prior to 3GPP Rel-17.

According to an aspect of the present application, wherein the priority of the first CSI report depends on a first ID, and the first ID is associated with the first encoder.

According to an aspect of the present application, wherein the first pre-compressed CSI serves as an input of the first encoder and is used for generating first compressed CSI, and the priority of the first CSI report depends on a size of the first compressed CSI.

According to an aspect of the present application, wherein the priority of the first CSI report depends on a first parameter, and the first parameter is associated with the first encoder.

According to an aspect of the present application, wherein the CSI for the first CSI report comprises a first report quantity, and the first report quantity is used for determining a size of the CSI for the first CSI report.

According to an aspect of the present application, wherein the first CSI set is transmitted on a first physical channel, a first threshold depends on a size of resources allocated to the first physical channel, and the first encoder depends on the first threshold.

According to an aspect of the present application, wherein the second node is a base station.

According to an aspect of the present application, wherein the second node is a user equipment.

According to an aspect of the present application, wherein the second node is a relay node.

The present application discloses a first node used for wireless communication, comprising:

a first receiver receiving first signaling, wherein the first signaling is used for determining N CSI reports, N is a positive integer, and the N CSI reports comprise a first CSI report; and
a first transmitter sending a first CSI set, wherein the first CSI set comprises CSI for the N CSI reports;
wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

The present application discloses a second node for wireless communication, comprising:

a second transmitter sending first signaling, wherein the first signaling is used for determining N CSI reports, N is a positive integer, and the N CSI reports comprise a first CSI report; and
a second receiver receiving a first CSI set, wherein the first CSI set comprises CSI for the N CSI reports;
wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

As an embodiment, compared with a traditional solution, the present application has the following advantages:

determination of priority of the artificial intelligence- or machine learning-based CSI report is solved;
implementation complexity is reduced, and system design is optimized;
performance of the CSI report is improved; and
overheads of the CSI report are reduced.

**Brief Description of the Drawings**

Other features, purposes and advantages of the present application will become more apparent by reading the detailed description of non-limiting embodiments with reference to the following drawings:

FIG. 1 shows a flow chart of first signaling and a first CSI set according to an embodiment of the present application;
FIG. 2 shows a schematic diagram of a network architecture according to an embodiment of the present application;
FIG. 3 shows a schematic diagram of an embodiment of a radio protocol architecture for a user plane and a control plane according to an embodiment of the present application;
FIG. 4 shows a schematic diagram of a first communication device and a second communication device according to an embodiment of the present application;
FIG. 5 shows a flow chart of transmission according to an embodiment of the present application;
FIG. 6 shows a schematic diagram of a first encoder according to an embodiment of the present application;
FIG. 7 shows a schematic diagram of an artificial intelligence- or machine learning-based processing system according to an embodiment of the present application;
FIG. 8 shows a schematic diagram of a priority of a first CSI report depending on a first ID according to an embodiment of the present application;
FIG. 9 shows a schematic diagram of a first value according to an embodiment of the present application;
FIG. 10 shows a schematic diagram of a first pre-compressed CSI, a first encoder and a first compressed CSI according to an embodiment of the present application;
FIG. 11 shows a schematic diagram of a priority of a first CSI report depending on a first parameter according to an embodiment of the present application;
FIG. 12 shows a schematic diagram of a first encoder comprising a plurality of adaptation layers according to an embodiment of the present application;
FIG. 13 shows a schematic diagram of a first report quantity according to an embodiment of the present application;
FIG. 14 shows a schematic diagram of a first CSI set and a first threshold according to an embodiment of the present application;
FIG. 15 shows a structural block diagram of a processing apparatus used in a first node according to an embodiment of the present application; and
FIG. 16 shows a structural block diagram of a processing apparatus used in a second node according to an embodiment of the present application.

## Detailed Description of Embodiments

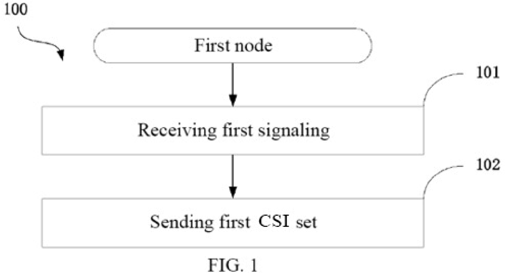

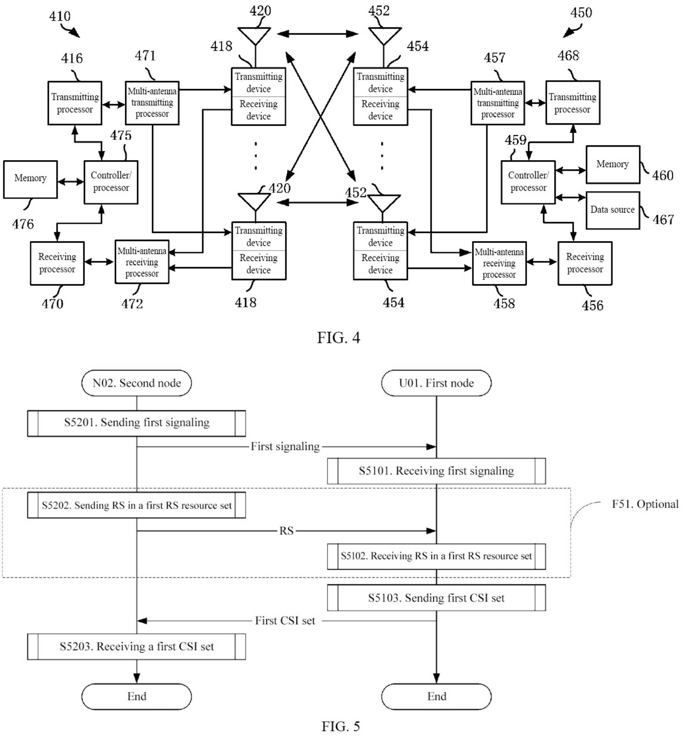

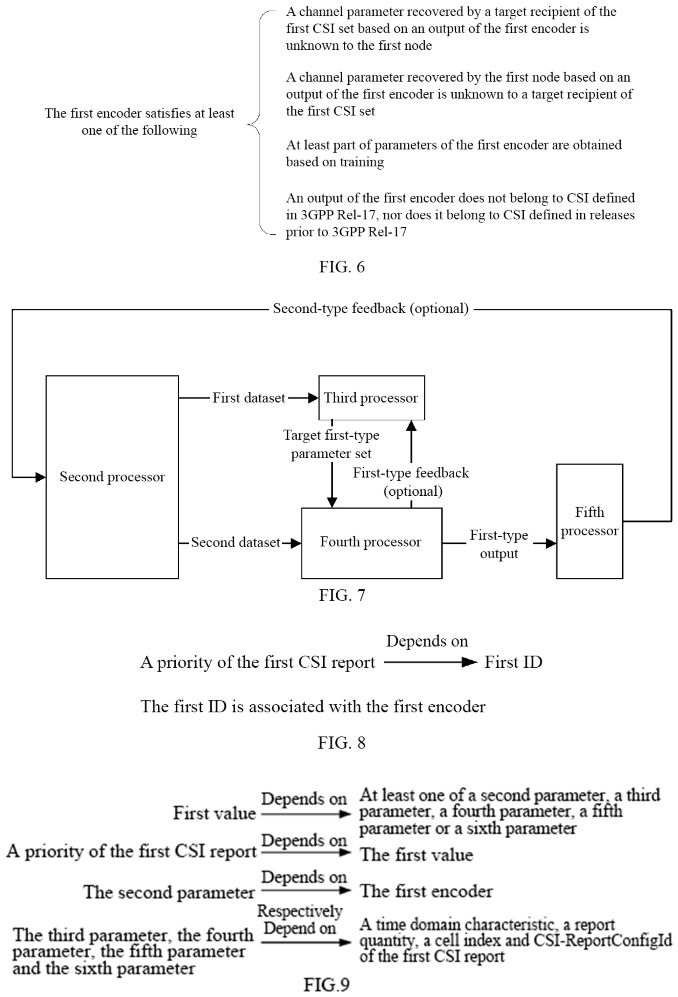

The technical solutions of the present application will be further described in detail below in conjunction with the drawings. It should be noted that, in the absence of conflict, embodiments and the features in the embodiments in the present application can be arbitrarily combined with each other. Based on considerations of flexibility, complexity, overheads, compatibility, etc., those skilled in the art are motivated to flexibly combine the embodiments in different drawings without conflict, for example (but not limited to), the embodiment in FIG. 1 and the embodiments in FIGS. 5-14, the embodiment in FIG. 5 and the embodiments in FIGS. 6-14, etc.

## Embodiment 1

Embodiment 1 illustrates a flow chart of first signaling and a first CSI set according to an embodiment of the present application, as shown in FIG. 1. In 100 shown in FIG. 1, each block represents one step. In particular, the order of steps in the blocks does not represent a specific temporal sequence relation between the steps.

In embodiment 1, the first node in the present application receives first signaling in step 101, the first signaling is used for determining N CSI reports, N is a positive integer, and the N CSI reports comprise a first CSI report; in step 102, a first CSI set is sent, and the first CSI set comprises CSI for the N CSI reports; wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

As an embodiment, the first signaling comprises higher layer signaling.

As an embodiment, the first signaling comprises Radio Resource Control (RRC) signaling.

As an embodiment, the first signaling comprises a Medium Access Control Layer Control Element (MAC CE).

As an embodiment, the first signaling comprises Downlink Control Information (DCI).

As one embodiment, the first signaling is a DCI.

As an embodiment, the first signaling comprises higher layer signaling and DCI.

As an embodiment, the first signaling comprises RRC signaling and DCI.

As an embodiment, the first signaling comprises RRC signaling and MAC CE.

As an embodiment, the first signaling triggers sending of the first CSI set.

As an embodiment, the first signaling triggers a CSI report for the N CSI reports.

As an embodiment, the first signaling indicates the N CSI reports.

As an embodiment, the first signaling indicates a trigger state of the N CSI reports.

As an embodiment, the first signaling is DCI, and a DCI field CSI request of the first signaling indicates the N CSI reports.

As an embodiment, the first signaling is DCI, and a signaling format of the first signaling is DCI format 0_1 or DCI format 0_2.

As an embodiment, the first signaling is DCI, and a Cyclic Redundancy Check (CRC) of the first signaling is scrambled by a Cell (C)-Radio Network Temporary Identifier (RNTI).

As an embodiment, the first signaling is DCI, and the CRC of the first signaling is scrambled by a Modulation and Coding Scheme (MCS)-C-RNTI.

As an embodiment, the first signaling is DCI, and the CRC of the first signaling is scrambled by a Configured Scheduling (CS)-RNTI.

As an embodiment, N is equal to 1, and the N CSI reports only comprise the first Channel State Information (CSI) report.

As an embodiment, the N is greater than 1, and the N CSI reports further comprise at least one CSI report in addition to the first CSI report.

As an embodiment, each CSI report of the N CSI reports is an RRC Information Element (IE).

As an embodiment, each CSI report of the N CSI reports is a CSI report setting.

As an embodiment, each CSI report of the N CSI reports is configured by an RRC IE.

As an embodiment, each CSI report of the N CSI reports is a CSI report configured by an RRC IE.

As an embodiment, each CSI report of the N CSI reports is a CSI-ReportConfig IE.

As an embodiment, each CSI report of the N CSI reports is configured by a CSI-ReportConfig IE.

As an embodiment, each CSI report of the N CSI reports is a CSI report configured by a CSI-ReportConfig IE.

As an embodiment, each CSI report of the N CSI reports is a CSI report setting configured by a CSI-ReportConfig IE.

As an embodiment, each CSI report of the N CSI reports is identified by a CSI-ReportConfigId.

As an embodiment, the first CSI set comprises CSI for at least part of CSI reports of the N CSI reports.

As an embodiment, the first CSI set comprises CSI for each CSI report of the N CSI reports.

As an embodiment, for each CSI report of the N CSI reports, the first CSI set comprises CSI for the CSI report.

As an embodiment, the first CSI set comprises CSI for only part of CSI reports of the N CSI reports.

As an embodiment, one CSI report exists in the N CSI reports, and the first CSI set does not comprise CSI for the one CSI report.

As an embodiment, the first CSI set comprises CSI for the first CSI report.

As an embodiment, the first CSI set does not comprise CSI for the first CSI report.

As an embodiment, the first CSI set comprises only part of information in CSI for the first CSI report.

As an embodiment, the first CSI set comprises all information in CSI for the first CSI report.

As an embodiment, for any CSI report of the N CSI reports, CSI for the CSI report is generated according to the configuration of the CSI report.

As an embodiment, for any CSI report of the N CSI reports, the CSI report indicates values of paet or all of higher layer parameters in higher layer parameters "resourcesForChannelMeasurement", "csi-IM-ResourcesForInterference", "reportQuantity", "nzp-CSI-RS-ResourcesForInterference", "reportCondfigType", "reportFreqConfiguration", "timeRestrictionForChannelMeasurements", "timeRestrictionForInterferenceMeasurements", "subbandSize" or "codebookConfig" corresponding to CSI for the CSI report.

As an embodiment, the first CSI report indicates the first Reference Signal (RS) resource set.

As an embodiment, CSI-ReportConfig IE for configuring the first CSI report indicates the first RS resource set.

As an embodiment, the first CSI report indicates an identifier of the first RS resource set.

As an embodiment, an identifier of the first RS resource set is NZP-CSI-RS-ResourceSetId.

As an embodiment, an identifier of the first RS resource set is CSI-SSB-ResourceSetId.

As an embodiment, an identifier of the first RS resource set is CSI-ResourceConfigId.

As an embodiment, an identifier of the first RS resource set is SSB-Index.

As an embodiment, an identifier of the first RS resource set is NZP-CSI-RS-ResourceSetId or CSI-SSB-ResourceSetId.

As an embodiment, the first CSI report indicates an identifier of each RS resource in the first RS resource set.

As an embodiment, CSI-ReportConfig IE for configuring the first CSI report indicates an identifier of each RS resource in the first RS resource set.

As an embodiment, an identifier of each RS resource in the first RS resource set is NZP-CSI-RS-ResourceId.

As an embodiment, an identifier of each RS resource in the first RS resource set is SSB-Index.

As an embodiment, an identifier of any RS resource in the first RS resource set is NZP-CSI-RS-ResourceId or SSB-Index.

As an embodiment, the first CSI report indicates that the first RS resource set is used for channel measurement.

As an embodiment, the first CSI report indicates that the first RS resource set is used for interference measurement.

As an embodiment, a resourcesForChannelMeasurement field of the first CSI report indicates the first RS resource set.

As an embodiment, CSI-ReportConfig IE for configuring the first CSI report indicates that the first RS resource set is used for channel measurement.

As an embodiment, a resourcesForChannelMeasurement field of CSI-ReportConfig IE for configuring the first CSI report indicates the first RS resource set.

As an embodiment, a first information block and a second information block are jointly used for determining the first RS resource set; the first information block indicates a plurality of RS resource sets, and the first RS resource set is one of the plurality of RS resource sets; the second information block indicates the first RS resource set from the plurality of RS resource sets; and the first information block is used for configuring the first CSI report.

As an embodiment, the first information block is CSI-ReportConfig IE used for configuring the first CSI report.

As an embodiment, the second information block is carried by at least one RRC IE.

As an embodiment, the second information block is carried by a Medium Access Control Layer Control Element (MAC CE).

As an embodiment, the second information block is CSI-AperiodicTriggerStateList IE.

As an embodiment, the second information block and the first information block are carried by the same RRC IE.

As an embodiment, the second information block and the first information block are carried by different RRC IEs respectively.

As an embodiment, the first RS resource set is identified by a CSI-ResourceConfigId.

As an embodiment, the first RS resource set is a Channel State Information Reference Signal (CSI-RS) resource set.

As an embodiment, the first RS resource set is a Non-Zero-Power (NZP) CSI-RS resource set.

As an embodiment, the first RS resource set is identified by an NZP-CSI-RS-ResourceSetId.

As an embodiment, the first RS resource set is a CSI-SSB resource set.

As an embodiment, the first RS resource set is identified by a CSI-SSB-ResourceSetId.

As an embodiment, the first RS resource set comprises only one RS resource.

As an embodiment, the first RS resource set comprises a plurality of RS resources.

As an embodiment, each RS resource in the first RS resource set is a CSI-RS resource.

As an embodiment, each RS resource in the first RS resource set is an NZP CSI-RS resource.

As an embodiment, each RS resource in the first RS resource set is identified by an NZP-CSI-RS-ResourceId.

As an embodiment, each RS resource in the first RS resource set is a Synchronization Signal/Physical Broadcast Channel (SS/PBCH) block resource.

As an embodiment, each RS resource in the first RS resource set is identified by an SSB-Index.

As an embodiment, any RS resource in the first RS resource set is a CSI-RS resource or an SS/PBCH block resource.

As an embodiment, any RS resource in the first RS resource set is identified by an NZP-CSI-RS-ResourceId or SSB-Index.

As an embodiment, each RS resource in the first RS resource set comprises at least one RS port.

As an embodiment, the RS port comprises an antenna port.

As an embodiment, the RS port comprises a CSI-RS port.

As an embodiment, the RS port comprises an antenna port or a CSI-RS port.

As an embodiment, RS resources in the first RS resource set belong to the same cell.

As an embodiment, two RS resources in the first RS resource set belong to different cells.

As an embodiment, RS resources in the first RS resource set belong to the same Bandwidth Part (BWP).

As an embodiment, two RS resources in the first RS resource set belong to different BWPs.

As an embodiment, the first RS resource set is an RS resource set associated with the first CSI report and used for channel measurement.

As an embodiment, the RS resource set associated with the first CSI report and used for channel measurement is the first RS resource set.

As an embodiment, the measurement for the first RS resource set means: measurement for RS transmitted in the first RS resource set.

As an embodiment, the measurement for the first RS resource set means: measurement for RS transmitted in only one RS resource in the first RS resource set.

As an embodiment, the measurement for the first RS resource set means: measurement for RS transmitted in at least one RS resource in the first RS resource set.

As an embodiment, the measurement for the first RS resource set means: measurement for RS transmitted in each RS resource in the first RS resource set.

As an embodiment, the first RS resource set is used for obtaining channel measurement for generating the first pre-compressed CSI.

As an embodiment, the first RS resource set is used for obtaining interference measurement for generating the first pre-compressed CSI.

As an embodiment, each RS resource in the first RS resource set is used for obtaining channel measurement for generating the first pre-compressed CSI.

As an embodiment, only part of RS resources in the first RS resource set are used for obtaining channel measurement for generating the first pre-compressed CSI.

As an embodiment, only one RS resource in the first RS resource set is used for obtaining channel measurement for generating the first pre-compressed CSI.

As an embodiment, the first node obtains channel measurement for generating the first pre-compressed CSI based on the first RS resource set.

As an embodiment, the first node obtains channel measurement for generating the first pre-compressed CSI based on RS transmitted in the first RS resource set not later than a CSI reference resource of the first CSI set.

As an embodiment, the first node obtains channel measurement for generating the first pre-compressed CSI based on a most recent transmission occasion of RS resources in the first RS resource set not later than a CSI reference resource of the first CSI set.

As an embodiment, the first node obtains channel measurement for generating the first pre-compressed CSI based on only the first RS resource set.

As an embodiment, the first node obtains channel measurement for generating the first pre-compressed CSI based on only RS transmitted in the first RS resource set not later than a CSI reference resource of the CSI for the first CSI report.

As an embodiment, the first node obtains channel measurement for generating the first pre-compressed CSI based on only the most recent transmission occasion of RS resources in the first RS resource set not later than a CSI reference resource of the CSI for the first CSI report.

As an embodiment, the CSI for the first CSI report comprises compressed CSI.

As an embodiment, the compressed CSI satisfies at least one of the following:

a channel parameter recovered by a target recipient of the first CSI set based on the compressed CSI is unknown to the first node;
a channel parameter recovered by the first node based on the compressed CSI is unknown to the target recipient of the first CSI set;
at least part of parameters of a generator of the compressed CSI are obtained based on training; and
the compressed CSI does not belong to the CSI defined in 3GPP Rel-17, nor does it belong to the CSI defined in releases prior to 3GPP Rel-17.

As an embodiment, the essence of the above method comprises that: the CSI for the first CSI report carries artificial intelligence- or machine learning-based CSI.

As an embodiment, a problem to be solved by the present application comprises: how to determine a priority of an artificial intelligence- or machine learning-based CSI report. The above method determines the priority of the first CSI report according to the first encoder, which solves this problem.

As an embodiment, the benefits of the above method comprise that: the priority determination of the artificial intelligence- or machine learning-based CSI report is solved.

As an embodiment, the benefits of the above method comprise that: the accuracy and quantity of the CSI report can be better balanced, thereby optimizing the system design.

As an embodiment, CSI for the first CSI report comprises one or more of Channel Quality Indicator (CQI), Precoding Matrix Indicator (PMI), CSI-RS Resource Indicator (CRI), SS/PBCH Block Resource Indicator (SSBRI), Layer Indicator (LI), Rank Indicator (RI), Layer 1 Reference Signal Received Power (L1-RSRP), Layer 1 Signal-to-Interference and Noise Ratio (L1-SINR) or CapabilityIndex.

As an embodiment, the CSI for the first CSI report compresses CSI and comprises one or more of CQI, PMI, CRI, SSBRI, LI, RI, L1-RSRP, L1-SINR, or CapabilityIndex.

As an embodiment, the target recipient of the first CSI set is a sender of the first signaling.

As an embodiment, the target recipient of the first CSI set is a sender of RS transmitted in the first RS resource set.

As an embodiment, the target recipient of the first CSI set is the second node.

As an embodiment, the channel parameter comprises a channel matrix.

As an embodiment, the channel parameter comprises a raw channel matrix.

As an embodiment, any element in the raw channel matrix comprises information about a channel experienced on one frequency unit by an RS transmitted on one RS port in the first RS resource set.

As an embodiment, the frequency unit is a subband.

As an embodiment, the frequency unit is a Resource Block (RB).

As an embodiment, the frequency unit is composed of a plurality of consecutive RBs.

As an embodiment, the frequency unit is a subcarrier.

As an embodiment, the frequency unit is composed of a plurality of consecutive subcarriers.

As an embodiment, the channel parameter comprises an eigenvector.

As an embodiment, the channel parameter comprises an eigenvalue.

As an embodiment, the channel parameter comprises a precoding matrix or a precoding vector.

As an embodiment, the channel parameter comprises one or more of a relative phase, a relative amplitude, or a relative coefficient between at least two antenna ports.

As an embodiment, the channel parameter comprises a Precoding Matrix Indicator (PMI).

As an embodiment, a generator of the recovered channel parameter is training-based.

As an embodiment, the first node measures RS transmitted in the first RS resource set to obtain a channel matrix $H_w, w = 1, ..., W$, wherein a dimension of $H_w$ is $R \times T$, the $T$ and the $R$ are the number of transmitting antenna ports and the number of receiving antennas respectively, and the $W$ is the number of the frequency units; under a condition of using a precoding matrix $V_w, w = 1, ..., W$, a precoded channel is $P_w, w = 1, ..., W$, and $P_w = H_w \cdot V_w$, wherein a dimension of the $V_w$ is $T \times L$, and the $L$ is a rank or the number of layers.

As an embodiment, the channel parameter comprises $H_w, w = 1, ..., W$ or $V_w, w = 1, ..., W$.

As an embodiment, the generator of the CSI for the first CSI report comprises the first encoder.

As an embodiment, the generator of the CSI for the first CSI report is the first encoder.

As an embodiment, the generator of the CSI for the first CSI report is obtained based on training.

As an embodiment, the training is based on a training dataset, measurement for a first-type radio signal is used for generating the training dataset, and the first-type radio signal comprises a downlink RS.

As an embodiment, the downlink RS comprises at least one of CSI-RS and SS/PBCH blocks.

As an embodiment, the downlink RS comprises CSI-RS.

As an embodiment, the downlink RS comprises SS/PBCH blocks.

As an embodiment, the downlink RS comprises CSI-RS and SS/PBCH blocks.

As an embodiment, the CSI for the first CSI report comprises one or more of a Rank Indicator (RI), a CSI-RS Resource Indicator (CRI), or a Channel Quality Indicator (CQI).

As an embodiment, the CSI for the first CSI report comprises compressed CSI and comprises one or more of RI, CRI or CQI.

As an embodiment, the pre-compressed CSI comprises PMI.

As an embodiment, the first pre-compressed CSI comprises PMI based on a type II codebook, a type II port selection codebook, an enhanced type II codebook, an enhanced type II port selection codebook or a further enhanced type II port selection codebook.

As an embodiment, the first pre-compressed CSI comprises at least one precoding matrix.

As an embodiment, the precoding matrix is in a spatial-frequency domain.

As an embodiment, the precoding matrix is in an angular-delay domain projection.

As an embodiment, the first pre-compressed CSI comprises at least one channel matrix.

As an embodiment, the first pre-compressed CSI comprises at least one raw channel matrix.

As an embodiment, the channel matrix is in a spatial-frequency domain.

As an embodiment, the channel matrix is in an angular-delay domain projection.

As an embodiment, the first pre-compressed CSI comprises at least one eigenvector.

As an embodiment, the first pre-compressed CSI comprises at least one eigenvector and at least one eigenvalue.

As an embodiment, the first pre-compressed CSI is used for determining a relative phase, amplitude, or coefficient between at least two antenna ports.

As an embodiment, an output of the first encoder comprises a group of scalars.

As an embodiment, an output of the first encoder comprises at least one group of scalars.

As an embodiment, an output of the first encoder comprises a group of vectors.

As an embodiment, an output of the first encoder comprises at least one group of vectors.

As an embodiment, an output of the first encoder comprises a group of bits.

As an embodiment, an output of the first encoder comprises at least one group of bits.

As an embodiment, an output of the first encoder is based on a complex number or a real number.

As an embodiment, an output of the first encoder is unquantized.

As an embodiment, the benefits of the above method comprise that: quantization is independent of the first encoder, the complexity is simplified and the method is better applicable to different terminals.

As an embodiment, an output of the first encoder is quantized.

As an embodiment, an output of the first encoder is binary.

As an embodiment, the benefits of the above method comprise that: the combined design of quantization and compression further optimizes the performance.

As an embodiment, the first pre-compressed CSI is used as an input of the first encoder for generating all the information in the CSI for the first CSI report.

As an embodiment, the first pre-compressed CSI is used as an input of the first encoder for generating only part of information in the CSI for the first CSI report.

As an embodiment, the first pre-compressed CSI is used as an input of the first encoder for generating compressed CSI comprised in the CSI for the first CSI report.

As an embodiment, the first pre-compressed CSI is inputted into the first encoder, and an output of the first encoder is used for generating the CSI for the first CSI report.

As an embodiment, the first pre-compressed CSI is inputted into the first encoder, and an output of the first encoder comprises the CSI for the first CSI report.

As an embodiment, the first pre-compressed CSI is inputted into the first encoder, and an output of the first encoder is the CSI for the first CSI report.

As an embodiment, an input of the first encoder is the first pre-compressed CSI.

As an embodiment, an input of the first encoder comprises the first pre-compressed CSI.

As an embodiment, an output of the first encoder is used for generating all the information in the CSI for the first CSI report.

As an embodiment, an output of the first encoder comprises all the information in the CSI for the first CSI report.

As an embodiment, an output of the first encoder is used for generating only part of information in the CSI for the first CSI report.

As an embodiment, an output of the first encoder is used for generating compressed CSI comprised in the CSI for the first CSI report.

As an embodiment, an output of the first encoder comprises compressed CSI comprised in the CSI for the first CSI report.

As an embodiment, an output of the first encoder is compressed CSI comprised in the CSI for the first CSI report.

As an embodiment, the first CSI report is used for determining the first encoder.

As an embodiment, the first CSI report indicates the first encoder.

As an embodiment, the first RS resource set is associated with the first encoder.

As an embodiment, the first CSI report indicates the first encoder by indicating the first RS resource set.

As an embodiment, the first CSI report is used for determining a plurality of encoders, and the first encoder is one of the plurality of encoders.

As an embodiment, the first CSI report indicates the plurality of encoders.

As an embodiment, the first CSI report is associated with the plurality of encoders.

As an embodiment, the first RS resource set is associated with the plurality of encoders.

As an embodiment, the first CSI report indicates the plurality of encoders by indicating the first RS resource set.

As an embodiment, the plurality of encoders are candidates for the generator of the CSI for the first CSI report.

As an embodiment, the plurality of encoders are candidates for the generator of compressed CSI comprised in the CSI for the first CSI report.

As an embodiment, the first encoder is indicated to the first node by a target recipient of the first CSI set.

As an embodiment, the benefits of the above method comprise that: the target recipient of the first CSI set is supported to optimize the overall system performance.

As an embodiment, the benefits of the above method comprise that: misunderstanding between the target recipient of the first CSI set and the first node regarding the priority of the first CSI report is avoided.

As an embodiment, the first signaling indicates the first encoder.

As an embodiment, the first signaling indicates the first encoder from the plurality of encoders.

As an embodiment, the benefits of the above method comprise that: the uplink overheads are saved and the UE complexity is reduced.

As an embodiment, the benefits of the above method comprise that: it is convenient for a base station to optimize the global performance.

As an embodiment, the first node determines the first encoder by itself.

As an embodiment, the first node determines the first encoder by itself from the plurality of encoders.

As an embodiment, the benefits of the above method comprise that: the UE flexibly selects the first encoder according to actual demands, thereby optimizing the performance.

As an embodiment, the benefits of the above method comprise that: it is better applicable to different terminals.

As an embodiment, the benefits of the above method comprise that: downlink signaling overheads are saved.

As an embodiment, higher layer signaling is used for indicating the first encoder from the plurality of encoders.

As a sub-embodiment of the above embodiment, the higher layer signaling is RRC IE.

As a sub-embodiment of the above embodiment, the higher layer signaling is MAC CE.

As a sub-embodiment of the above embodiment, the higher layer signaling comprises CSI-AperiodicTriggerStateList IE.

As an embodiment, the benefits of the above method comprise that: dynamic signaling overheads are saved.

As an embodiment, the meaning of one CSI report being associated with one encoder comprises that: the one encoder can be used for generating CSI for the one CSI report.

As an embodiment, the meaning of one CSI report being associated with one encoder comprises that: the encoder is a candidate for a generator of CSI for the one CSI report.

As an embodiment, the meaning of one RS resource set being associated with one encoder comprises that: channel measurement obtained based on the one RS resource set can be used as an input of the encoder.

As an embodiment, the meaning of one RS resource set being associated with one encoder comprises that: the one encoder can be used for generating CSI based on channel measurement obtained through the one RS resource set.

As an embodiment, the meaning of the priority of the first CSI report depending on the first encoder comprises that: the priority of the first CSI report depends on an ID of the first encoder.

As an embodiment, the meaning of the priority of the first CSI report depending on the first encoder comprises that: the priority of the first CSI report depends on a model used for constructing the first encoder.

As an embodiment, the meaning of the priority of the first CSI report depending on the first encoder comprises that: the priority of the first CSI report depends on a dataset used for training the first encoder.

As an embodiment, the benefits of the above method comprise that: the priority of the first CSI report is determined depending on the first encoder or its related information, thereby optimizing the performance of the CSI report.

As an embodiment, the meaning of the priority of the first CSI report depending on the first encoder comprises that: the priority of the first CSI report depends on a decoder corresponding to the first encoder.

As an embodiment, the meaning of the priority of the first CSI report depending on the first encoder comprises that: the priority of the first CSI report depends on a model used for constructing a decoder corresponding to the first encoder.

As an embodiment, the meaning of the priority of the first CSI report depending on the first encoder comprises that: the priority of the first CSI report depends on a dataset used for training a decoder corresponding to the first encoder.

As an embodiment, the benefits of the above method comprise that: the priority of the first CSI report depends on the decoder or its related information, different encoders are supported to correspond to the same decoder, the implementation complexity is reduced and the flexibility is increased.

As an embodiment, the meaning of the priority of the first CSI report depending on the first encoder comprises that: the priority of the first CSI report depends on the first encoder and a decoder corresponding to the first encoder.

As an embodiment, the benefits of the above method comprise that: the priority of the first CSI report simultaneously depends on an encoder and a decoder or their related information, thereby further optimizing the performance of the CSI reporting and CSI recovery.

As an embodiment, the meaning of the priority of the first CSI report depending on the first encoder comprises that: the priority of the first CSI report depends on an output of the first encoder.

As an embodiment, the meaning of the priority of the first CSI report depending on the first encoder comprises that: the priority of the first CSI report depends on a payload size of an output of the first encoder.

As an embodiment, the benefits of the above method comprise that: a better balance is achieved between accuracy and overheads of the CSI report, thereby optimizing the overall system performance.

As an embodiment, whether the first CSI set comprises the CSI for the first CSI report is associated with the priority of the first CSI report.

As an embodiment, whether the first CSI set comprises the CSI for the first CSI report depends on the priority of the first CSI report.

As an embodiment, the benefits of the above method comprise that: CSI for the CSI reports with high priority is preferentially fed back, the CSI reports are optimized, and the performance is improved.

As an embodiment, the N is greater than 1, and any two CSI reports in the N CSI reports have different priorities.

As an embodiment, the first CSI set comprises the CSI for the first CSI report, and a position of the CSI for the first CSI report in the first CSI set depends on the priority of the first CSI report.

As an embodiment, CSI for the CSI reports with higher priority is arranged more forward in the first CSI set.

As an embodiment, CSI for the CSI reports with higher priority is mapped to a lower order bit in the first CSI set.

As an embodiment, the benefits of the above method comprise that: it ensures that the target recipients of the first node and the first CSI set have a consistent understanding of the contents of the first CSI set.

As an embodiment, a priority of any CSI report in the N CSI reports is associated with one or more of a time domain characteristic, a report quantity, a cell index or CSI-ReportConfigId of the CSI report.

As an embodiment, a priority of any CSI report in the N CSI reports depends on one or more of a time domain characteristic, a report quantity, a cell index or CSI-ReportConfigId of the CSI report.

As an embodiment, the priority of the first CSI report is associated with one or more of a time domain characteristic, a report quantity, a cell index or CSI-ReportConfigId of the first CSI report.

As an embodiment, the priority of the first CSI report depends on one or more of a time domain characteristic, a report quantity, a cell index or CSI-ReportConfigId of the first CSI report.

As an embodiment, the priority of the first CSI report depends on the first encoder as well as a time domain characteristic, a report quantity, a cell index and CSI-ReportConfigId of the first CSI report.

As an embodiment, the time domain characteristic comprises periodic, semi-persistent and aperiodic.

As an embodiment, the cell index is SCellIndex or ServCellIndex.

As an embodiment, the first signaling is transmitted in a Physical Downlink Shared Channel (PDSCH).

As an embodiment, the first signaling is transmitted in a Physical Downlink Control Channel (PDCCH).

As an embodiment, the first CSI set is transmitted in a Physical Uplink Shared Channel (PUSCH).

As an embodiment, the first CSI set is transmitted in a Physical Downlink Control Channel (PUCCH).

**Embodiment 2**

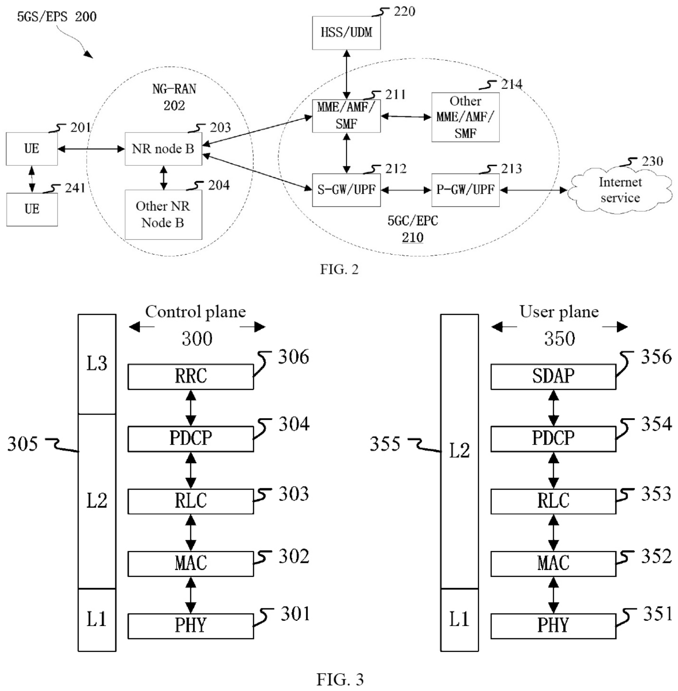

Embodiment 2 illustrates a schematic diagram of a network architecture according to an embodiment of the present application, as shown in FIG. 2.

FIG. 2 indicates a network architecture 200 of Long-Term Evolution (LTE), Long-Term Evolution Advanced (LTE-A) and a future 5G system. The network architecture 200 of LTE, LTE-A and the future 5G system is referred to as an Evolved Packet System (EPS) 200. The network architecture 200 of 5G NR or LTE may be referred to as a 5G System (5GS)/ Evolved Packet System (EPS) 200 or some other suitable terminologies. The 5GS/EPS 200 may comprise one or more User Equipments (UEs) 201, a UE 241 that performs sidelink communication with the UE 201, an next Generation-Radio Access Network (NG-RAN) 202, a 5G Core Network (5G-CN)/Evolved Packet Core (EPC) 210, a Home Subscriber Server (HSS)/Unified Data Management (UDM) 220, and an Internet service 230. The 5GS/EPS 200 may be interconnected with other access networks, but these entities/interfaces are not shown for simplicity. As shown in FIG. 2, the 5GS/EPS 200 provides a packet switching service, but those skilled in the art will readily appreciate that various concepts presented throughout the present application can be extended to networks that provide circuit switching services. The NG-RAN 202 comprises a New Radio (NR) node B (gNB) 203 and other gNBs 204. The gNB 203 provides user and control plane protocol termination towards the UE 201. The gNB 203 may be connected to other gNBs 204 via an Xn interface (e.g., backhaul). The gNB 203 may also be referred to as a base station, a base transceiver station, a radio base station, a radio transceiver, a transceiver function, a Basic Service Set (BSS), an Extended Service Set (ESS), a Transmitter Receiver Point (TRP), or some other suitable terminologies. The gNB 203 provides an access point to the 5G-CN/EPC 210 for the UE 201. Instances of the UE 201 comprise a cellular phone, a smart phone, a Session Initiation Protocol (SIP) phone, a laptop computer, a Personal Digital Assistant (PDA), a satellite radio, a global positioning system, a multimedia apparatus, a video apparatus, a digital audio player (e.g., an MP3 player), a camera, a game console, a UAV, an aircraft, a narrowband physical network device, a machine type communication device, a land vehicle, an automobile, a wearable device, or any other similarly functional apparatuses. Those skilled in the art may also refer to the UE 201 as a mobile station, a subscriber station, a mobile element, a subscriber element, a wireless element, a remote element, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB 203 is connected to the 5G-CN/EPC 210 through an S1/NG interface. The 5G-CN/EPC 210 comprises a Mobility Management Entity (MME)/Authentication Management Field (AMF)/Session Management Function (SMF) 211, other MME/AMF/SMF 214, a Service Gateway (S-GW)/User Plane Function (UPF) 212, and a Packet Data Network Gateway (P-GW)/UPF 213. The MME/AMF/SMF 211 is a control node that processes signaling between the UE 201 and the 5G-CN/EPC 210. Generally, the MME/AMF/SMF 211 provides bearers and connection management. All user Internet Protocol (IP) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 comprises operator-corresponding Internet protocol services, which may specifically comprise Internet, Intranet, an IP Multimedia Subsystem (IMS) and packet switching services.

As an embodiment, the first node in the present application comprises the UE 201.

As an embodiment, the second node in the present application comprises the gNB 203.

As an embodiment, a radio link between the UE 201 and the gNB 203 comprises a cellular network link.

As an embodiment, a sender of the first signaling comprises the gNB 203.

As an embodiment, a recipient of the first signaling comprises the UE 201.

As an embodiment, a sender of the first CSI set comprises the UE 201.

As an embodiment, a recipient of the first CSI set comprises the gNB 203.

As an embodiment, the UE 201 supports the generation of CSI reports using AI or ML.

As an embodiment, the UE 201 supports the generation of a trained model using training data or the generation of part of parameters in a trained model using trained data.

As an embodiment, the UE 201 supports the generation of a trained model using training data and the generation of CSI using the model.

As an embodiment, the gNB 203 supports the recovery of AI or ML-based CSI.

## Embodiment 3

Embodiment 3 illustrates a schematic diagram of an embodiment of a radio protocol architecture for a user plane and a control plane according to an embodiment of the present application, as shown in FIG. 3.

Embodiment 3 shows a schematic diagram of an embodiment of a radio protocol architecture for a user plane and a control plane according to the present application, as shown in FIG. 3. FIG. 3 is a schematic diagram indicating an embodiment of a radio protocol architecture for a user plane 350 and a control plane 300, and FIG. 3 shows a radio protocol architecture for the control plane 300 between a first communication node device (UE, gNB or RSU in V2X) and a second communication node device (gNB, UE or RSU in V2X), or between two UEs using three layers: a Layer 1 (L1), a Layer 2 (L2) and a Layer 3 (L3). The Layer 1 (L1 layer) is the lowest layer and implements various Physical Layer (PHY) signal processing functions. The L1 will be referred to as PHY 301 herein. The Layer 2 (L2 layer) 305 is above the PHY 301 and is responsible for links between the first communication node device and the second communication node device or between the two UEs. The L2 layer 305 comprises a Medium Access Control (MAC) sublayer 302, a Radio Link Control (RLC) sublayer 303, and a Packet Data Convergence Protocol (PDCP) sublayer 304, and these sublayers are terminated at the second communication node device. The PDCP sublayer 304 provides multiplexing between different radio bearers and logical channels. The PDCP sublayer 304 also provides security by encrypting data packets and provides handover mobile support for the first communication node device between the second communication node devices. The RLC sublayer 303 provides segmentation and reassembly of upper layer data packets, retransmission of lost data packets, and reordering of data packets to compensate for unordered reception caused by an HARQ. The MAC sublayer 302 provides multiplexing between logical and transmission channels. The MAC sublayer 302 is also responsible for allocating various radio resources (e.g., resource blocks) in one cell between the first communication node devices. The MAC sublayer 302 is also responsible for HARQ operation. A Radio Resource Control (RRC) sublayer 306 in the layer 3 (L3 layer) in the control plane 300 is responsible for obtaining radio resources (i.e., radio bearers) and configuring a lower layer using RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 is substantially the same for the physical layer 351, the PDCP sublayer 354 in the L2 layer 355, the RLC sublayer 353 in the L2 layer 355, and the MAC sublayer 352 in the L2 layer 355 as for the corresponding layers and sublayers in the control plane 300, but the PDCP sublayer 354 also provides header compression for upper layer data packets to reduce the radio transmission overhead. The L2 layer 355 in the user plane 350 further comprises a Service Data Adaptation Protocol (SDAP) sublayer 356, and the SDAP sublayer 356 is responsible for mapping between a QoS (Quality of Service) flow and a Data Radio Bearer (DRB) to support the diversity of services. Although not shown, the first communication node device may have several upper layers above the L2 layer 355, comprising a network layer (e.g., an (IP) layer) terminated at the P-GW on a network side and an application layer terminated on the other end (e.g., a remote UE, a server, etc.) of connection.

As an embodiment, the radio protocol architecture in FIG. 3 is applicable to the first node in the present application.

As an embodiment, the radio protocol architecture in FIG. 3 is applicable to the second node in the present application.

As an embodiment, the first signaling is generated at the RRC sublayer 306.

As an embodiment, the first signaling is generated at the MAC sublayer 302 or the MAC sublayer 352.

As an embodiment, the first signaling is generated at the PHY 301 or the PHY 351.

As an embodiment, the first CSI set is generated at the PHY 301 or the PHY 351.

As an embodiment, the higher layer in the present application means a layer above the physical layer.

**Embodiment 4**

Embodiment 4 illustrates a schematic diagram of a first communication device and a second communication device according to an embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper layer data packets from a core network are provided to the controller/processor 475. The controller/processor 475 implements functionality of the L2 layer. In a DL, the controller/processor 475 provides header compression, encryption, packet segmentation and reordering, multiplexing between logical and transmission channels, and radio resource allocation to the second communication device 450 based on various priority metrics. The controller/processor 475 is also responsible for HARQ operation, retransmission of lost packets, and signaling to the second communication device 450. The transmitting processor 416 and the multi-antenna transmitting processor 471 implement various signal processing functions for the L1 layer (i.e., the physical layer). The transmitting processor 416 implements coding and interleaving to facilitate Forward Error Correction (FEC) at the second communication device 450, and constellation mapping based on various modulation schemes (e.g., Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmitting processor 471 performs digital spatial precoding, comprising codebook-based precoding, non-codebook-based precoding, and beamforming processing, on coded and modulated symbols, to generate one or more parallel streams. The transmitting processor 416 then maps each parallel stream to a subcarrier, multiplexes the modulated symbols with a reference signal (e.g., pilot frequency) in a time domain and/or frequency domain, and then uses an Inverse Fast Fourier Transform (IFFT) to generate a physical channel carrying a time domain multi-carrier symbol stream. Then, the multi-antenna transmitting processor 471 performs transmitting analog precoding/beamforming operation on the time domain multi-carrier symbol stream. Each transmitting device 418 converts a baseband multi-carrier symbol stream provided by the multi-antenna transmitting processor 471 into a radio frequency stream, and then provides the radio frequency stream to the different antenna 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier and converts the radio frequency stream into a baseband multi-carrier symbol stream to provide the baseband multi-carrier symbol stream to the receiving processor 456. The receiving processor 456 and the multi-antenna receiving processor 458 implement various signal processing functions of the L1 layer. The multi-antenna receiving processor 458 performs receiving analog precoding/beamforming operation on the baseband multi-carrier symbol stream from the receiving device 454. The receiving processor 456 uses a Fast Fourier Transform (FFT) to convert the baseband multi-carrier symbol stream after the receiving the analog precoding/beamforming operation from the time domain to the frequency domain. In the frequency domain, the physical layer data signal and the reference signal are demultiplexed by the receiving processor 456, wherein the reference signal will be used for channel estimation, and the data signal is used for recovering any parallel stream with the second communication device 450 as a destination after multi-antenna detection in the multi-antenna receiving processor 458. Symbols on each parallel stream are demodulated and recovered in the receiving processor 456, and soft decisions are generated. Then, the receiving processor 456 decodes and deinterleaves the soft decisions to recover upper layer data and control signals transmitted by the first communication device 410 on the physical channel. Then, the upper layer data and the control signals are provided to the controller/processor 459. The controller/processor 459 implements the functions of the L2 layer. The controller/processor 459 may be associated with the memory 460 that stores program codes and data. The memory 460 may be referred to as a computer-readable medium. In the DownLink (DL), the controller/processor 459 provides multiplexing between transmission and logical channels, packet reassembly, decryption, header decompression, and control signal processing to recover the upper layer data packets from the core network. Then, the upper layer data packets are provided to all protocol layers above the L2 layer. Various control signals may also be provided to the L3 for L3 processing. The controller/processor 459 is also responsible for error detection using an ACKnowledgement (ACK) and/or Negative ACKnowledgement (NACK) protocol to support the HARQ operation.

In transmission from the second communication device 450 to the first communication device 410, at the second communication device 450, the data source 467 is used to provide the upper layer data packets to the controller/processor 459. The data source 467 represents all the protocol layers above the L2 layer. Similar to the transmission function at the first communication device 410 described in the DL, the controller/processor 459 implements header compression, encryption, packet segmentation and reordering, and multiplexing between logical and transmission channels based on radio resource allocation of the first communication device 410, and implements L2 layer functions for the user plane and the control plane. The controller/processor 459 is also responsible for HARQ operation, retransmission of lost packets, and signaling to the first communication device 410. The transmitting processor 468 performs modulation mapping and channel coding processing; the multi-antenna transmitting processor 457 performs digital multi-antenna spatial precoding, comprising codebook-based precoding, non-codebook-based precoding, and beamforming processing; and then, the transmitting processor 468 modulates the generated parallel streams into multi-carrier/single-carrier symbol streams, which are provided to the different antenna 452 via the transmitting device 454 after analog precoding/beamforming operation in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 described in the transmission from the first communication device 410 to the second communication device 450. Each receiving device 418 receives a radio frequency signal through the corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions.

The controller/processor 475 may be associated with the memory 476 that stores program codes and data. The memory 476 may be referred to as a computer-readable medium. The controller/processor 475 provides multiplexing between transmission and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using the ACK and/or NACK protocol to support HARQ operation.

As an embodiment, the second communication device 450 comprises: at least one processor and at least one memory; the at least one memory comprises a computer program code; and the at least one memory and the computer program code are configured to be used together with the at least one processor. The second communication device 450 apparatus at least: receives first signaling, wherein the first signaling is used for determining N CSI reports, N is a positive integer, and the N CSI reports comprise a first CSI report; sends a first CSI set, wherein the first CSI set comprises CSI for the N CSI reports; wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

As an embodiment, the second communication device 450 comprises: a memory for storing a computer-readable instruction program, the computer-readable instruction program generates actions when executed by at least one processor, and the actions comprise: receiving first signaling, wherein the first signaling is used for determining N CSI reports, N is a positive integer, and the N CSI reports comprise a first CSI report; sending a first CSI set, wherein the first CSI set comprises CSI for the N CSI reports; wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

As an embodiment, the first communication device 410 comprises: at least one processor and at least one memory, wherein the at least one memory comprises a computer program code; and the at least one memory and the computer program code are configured to be used together with the at least one processor. The first communication device 410 apparatus at least: sends first signaling, wherein the first signaling is used for determining N CSI reports, N is a positive integer, and the N CSI reports comprise a first CSI report; and receives a first CSI set, wherein the first CSI set comprises CSI for the N CSI reports; wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

As an embodiment, the first communication device 410 comprises: a memory for storing a computer-readable instruction program, the computer-readable instruction program generates actions when executed by at least one processor, and the actions comprise: sending first signaling, wherein the first signaling is used for determining N CSI reports, N is a positive integer, and the N CSI reports comprise a first CSI report; and receiving a first CSI set, wherein the first CSI set comprises CSI for the N CSI reports; wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

As an embodiment, the first node in the present application comprises the second communication device 450.

As an embodiment, the second node in the present application comprises the first communication device 410.

As an embodiment, at least one of {the antenna 452, the receiving device 454, the receiving processor 456, the multi-antenna receiving processor 458, the controller/processor 459, the memory 460 and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As an embodiment, at least one of {the antenna 452, the transmitting device 454, the transmitting processor 468, the multi-antenna transmitting processor 457, the controller/processor 459, and the memory 460} is used for sending the first CSI set in the present application; and at least one of {the antenna 420, the receiving device 418, the receiving processor 470, the multi-antenna receiving processor 472, the controller/processor 475, and the memory 476} is used for receiving the first CSI set in the present application.

## Embodiment 5

Embodiment 5 illustrates a flow chart of transmission according to an embodiment of the present application, as shown in FIG. 5. In FIG. 5, a first node U01 and a second node N02 are two communication nodes for transmission by an air interface respectively, wherein the step in dotted block F51 is optional.

For **the first node U01,** first signaling is received in step S5101; in step S5102, RS is received in a first RS resource set; and in step S5103, a first CSI set is sent.

For **the second node N02,** first signaling is sent in step S5201; in step S5202, RS is sent in a first RS resource set; and in step S5203, a first CSI set is received.

In embodiment 5, the first signaling is used by the first node U01 for determining N CSI reports, N is a positive integer, and the N CSI reports comprise a first CSI report; the first CSI set comprises CSI for the N CSI reports; and the first CSI report is used by the first node U01 for determining a first RS resource set, measurement for the first RS resource set is used by the first node U01 for determining first pre-compressed CSI, the first pre-compressed CSI is used as an input of a first encoder by the first node U01 for generating CSI for the first CSI report, and a priority of the first CSI report depends on the first encoder.

As an embodiment, the first node U01 is the first node in the present application.

As an embodiment, the second node N02 is the second node in the present application.

As an embodiment, an air interface between the second node N02 and the first node U01 comprises a radio interface between a base station and a user equipment.

As an embodiment, the air interface between the second node N02 and the first node U01 comprises a radio interface between a relay node device and a user equipment.

As an embodiment, the air interface between the second node N02 and the first node U01 comprises a radio interface between a user equipment and a user equipment.

As an embodiment, the second node N02 is a maintenance base station of a serving cell of the first node U01.

As an embodiment, the step in dotted block F51 in FIG. 5 exists; and the above method used in the first node for wireless communication comprises: receiving RS in the first RS resource set.

As an embodiment, the step in dotted block F51 in FIG. 5 exists; and the above method used in the second node for wireless communication comprises: sending RS in the first RS resource set.

As an embodiment, the first node U01 receives RS in each RS resource in the first RS resource set.

As an embodiment, the first node U01 receives RS in part of RS resources in the first RS resource set.

As an embodiment, the first node U01 receives RS in at least one RS resource in the first RS resource set.

As an embodiment, measurement for the first RS resource set is used for generating the first pre-compressed CSI, the first pre-compressed CSI is used as an input of the first encoder for generating CSI for the first CSI report, and the CSI for the first CSI report satisfies at least one of the following:

a channel parameter recovered by a sender of the first RS resource set based on the CSI for the first CSI report is unknown to the first node;

a channel parameter recovered by the first node based on the CSI for the first CSI report is unknown to the sender of the first RS resource set;

at least part of parameters of a generator of the CSI for the first CSI report are obtained based on training; and

the CSI for the first CSI report does not belong to the CSI defined in 3GPP Rel-17, nor does it belong to the CSI defined in releases prior to 3GPP Rel-17.

As an embodiment, the sender of the first RS resource set is a sender of the first signaling.

As an embodiment, the sender of the first RS resource set is a target recipient of the first CSI set.

As an embodiment, the sender of the first RS resource set is the second node.

## Embodiment 6

Embodiment 6 illustrates a schematic diagram of a first encoder according to an embodiment of the present application, as shown in FIG. 6.

In embodiment 6, the first encoder satisfies at least one of the following:

a channel parameter recovered by a target recipient of the first CSI set based on an output of the first encoder is unknown to the first node;

a channel parameter recovered by the first node based on the output of the first encoder is unknown to the target recipient of the first CSI set;

at least part of parameters of the first encoder are obtained based on training; and

the output of the first encoder does not belong to the CSI defined in 3GPP Rel-17, nor does it belong to the CSI defined in releases prior to 3GPP Rel-17.

As an embodiment, the channel parameter comprises a channel matrix.

As an embodiment, the channel parameter comprises a raw channel matrix.

As an embodiment, any element in the raw channel matrix comprises information about a channel experienced on one frequency unit by an RS transmitted on one RS port in the first RS resource set.

As an embodiment, the channel parameter comprises an eigenvector.

As an embodiment, the channel parameter comprises an eigenvalue.

As an embodiment, the channel parameter comprises a precoding matrix or a precoding vector.

As an embodiment, the channel parameter comprises one or more of a relative phase, a relative amplitude, or a relative coefficient between at least two antenna ports.

As an embodiment, the channel parameter comprises a Precoding Matrix Indicator (PMI).

As an embodiment, a generator of the recovered channel parameter is training-based.

As an embodiment, the channel parameter comprises $H_W$, $w = 1, ..., W$ or $V_W$, $w = 1, ... , W$ in embodiment 1.

As an embodiment, the first encoder is obtained based on training.

As an embodiment, the training is based on a training dataset, measurement for a first-type radio signal is used for generating the training dataset, and the first-type radio signal comprises a downlink RS.

As an embodiment, the downlink RS comprises at least one of CSI-RS and SS/PBCH blocks.

As an embodiment, the downlink RS comprises CSI-RS.

As an embodiment, the downlink RS comprises SS/PBCH blocks.

As an embodiment, the downlink RS comprises CSI-RS and SS/PBCH blocks.

As an embodiment, the first encoder is nonlinear.

As an embodiment, the first encoder is non-codebook.

As an embodiment, an input of the first encoder comprises CSI.

As an embodiment, an input of the first encoder comprises a channel matrix.

As an embodiment, an input of the first encoder comprises a raw channel matrix.

As an embodiment, an input of the first encoder comprises channel matrix information.

As an embodiment, an input of the first encoder comprises an eigenvector.

As an embodiment, an input of the first encoder comprises an uncompressed channel matrix or eigenvector.

As an embodiment, an input of the first encoder comprises PMI.

As an embodiment, an output of the first encoder comprises compressed CSI.

As an embodiment, an output of the first encoder is used for determining at least one precoding matrix.

As an embodiment, a payload size of any input of the first encoder is greater than a payload size of an output of the first encoder corresponding to the any input.

As an embodiment, the first encoder is based on artificial intelligence or machine learning.

As an embodiment, the first encoder is based on a neural network.

As an embodiment, the first encoder comprises a neural network for CSI compression.

As an embodiment, the first encoder comprises an encoder of a neural network for CSI compression.

As an embodiment, the first encoder comprises a Convolutional Neural Network (CNN)-based encoder for CSI compression.

As an embodiment, only art of parameters of the first encoder are obtained based on training.

As an embodiment, the first encoder comprises compression.

As an embodiment, compression-related parameters of the first encoder are obtained based on training.

As an embodiment, the first encoder comprises quantization.

As an embodiment, quantization-related parameters of the first encoder are obtained based on training.

As an embodiment, the first encoder comprises a compressed CSI generator and a quantizer, and the quantizer quantizes compressed CSI generated by the compressed CSI generator; and parameters of the compressed CSI generator and parameters of the quantizer are obtained based on training.

As an embodiment, the benefits of the above method comprise that: joint optimization further enhances the system performance.

As an embodiment, the first encoder comprises compression and quantization, and only compression-related parameters are obtained based on training.

As an embodiment, the first encoder comprises a compressed CSI generator and a quantizer, and the quantizer quantizes compressed CSI generated by the compressed CSI generator; and only parameters of the compressed CSI generator are obtained based on training.

As an embodiment, the benefits of the above method comprise that: the complexity is reduced.

As an embodiment, the benefits of the above method comprise that: it is better applicable to different terminals.

As an embodiment, training for obtaining at least part of parameters of the first encoder is performed at the first node.

As an embodiment, training for obtaining at least part of parameters of the first encoder is performed at a target recipient of the first CSI set.

As an embodiment, the first encoder comprises K1 sub-processings, and K1 is a positive integer greater than 1; and the K1 sub-processings comprise one or more of convolution, pooling, concatenation or activation.

As an embodiment, one sub-processing in the K1 sub-processings comprises a fully connected layer.

As an embodiment, one sub-processing in the K1 sub-processings comprises a pooling layer.

As an embodiment, one sub-processing in the K1 sub-processings comprises at least one convolutional layer.

As an embodiment, one sub-processing in the K1 sub-processings comprises at least one encoding layer.

As an embodiment, two sub-processings in the K1 sub-processings comprise a fully connected layer and at least one encoding layer respectively.

As an embodiment, one encoding layer comprises at least one convolutional layer and one pooling layer.

As an embodiment, at a convolutional layer, at least one convolution kernel is used for convoluting an input of the first encoder to generate corresponding feature maps, and at least one feature map outputted by the convolutional layer is reshaped into one vector to be inputted to a fully connected layer; and the fully connected layer converts the one vector into an output of the first encoder.

As an embodiment, part or all of a convolution kernel size, the number of convolutional layers, a convolution stride, a pooling kernel size, a pooling kernel stride, a pooling function, an activation function or the number of feature maps of the first encoder are obtained through training.

As an embodiment, part or all of the convolution kernel, the pooling kernel, the pooling function, the activation function, parameters of the pooling function or parameters of the activation function of the first encoder are obtained through training.

As an embodiment, the first encoder is common for different layers.

As an embodiment, the first encoder is specific to a particular layer.

As an embodiment, the first encoder is specific to a layer.

As an embodiment, the layer refers to: a Multiple Input Multiple Output (MIMO) layer.

As an embodiment, the layer refers to: a transmission layer.

As an embodiment, the CSI for the first CSI report comprises CSI for R layers, and R is a positive integer greater than 1.

As an embodiment, the first pre-compressed CSI is used as an input of the first encoder for generating the CSI for each layer of the R layers.

As an embodiment, the first pre-compressed CSI is used as an input of the first encoder for generating the CSI for only one layer of the R layers.

As an embodiment, the first pre-compressed CSI is used as inputs of R encoders for generating the CSI for the R layers respectively; and the first encoder is one of the R encoders.

As an embodiment, the CSI for the R layers comprises compressed CSI for the R layers.

As an embodiment, the first pre-compressed CSI is used as an input of the first encoder for generating the compressed CSI for each layer of the R layers.

As an embodiment, the first pre-compressed CSI is used as an input of the first encoder for generating the compressed CSI for only one layer of the R layers.

As an embodiment, the first pre-compressed CSI is used as inputs of R encoders for generating the compressed CSI for the R layers respectively; and the first encoder is one of the R encoders.

As an embodiment, the CSI for the first CSI report comprises RI, and the RI indicates the R.

As an embodiment, the target recipient of the first CSI set recovers the channel parameter based on an output of the first encoder using a first decoder, the first node recovers the channel parameter based on the output of the first encoder using a second decoder, and the first decoder and the second decoder are obtained through training respectively.

As an embodiment, the benefits of the above method comprise that: the first node and the target recipient of the first CSI set can train the decoder respectively, air interface overheads are saved, and the method has better flexibility, can adapt to different terminals, and has better forward compatibility.

As an embodiment, the first decoder and the second decoder are obtained through different training.

As an embodiment, the first decoder and the second decoder are obtained through independent training.

As an embodiment, the first decoder and the first encoder are obtained through joint training.

As an embodiment, the essence of the above method comprises: training the first encoder at the sender of the first RS resource set, and the benefits of the above method comprise that: the performance is optimized.

As an embodiment, the training of the second decoder depends on the first encoder.

As an embodiment, the second decoder and the first encoder are obtained through joint training.

As an embodiment, the essence of the above method comprises that: training of the first encoder is performed at the first node, and the benefits of the above method comprise that: transmission of data for training over an air interface is avoided, and air interface overheads are saved.

As an embodiment, the training of the first decoder depends on the first encoder.

As an embodiment, the first pre-compressed CSI is used as an input of the first encoder by the first node for generating first compressed CSI, and all or part of information in the first compressed CSI is used as an input of the first decoder by the target recipient of the first CSI set for recovering a channel parameter.

As an embodiment, the recovered channel parameter comprises a recovered value of the first pre-compressed CSI.

As an embodiment, the recovered channel parameter comprises an estimated value of the first pre-compressed CSI.

As an embodiment, the recovered channel parameter comprises at least one precoding matrix or precoding vector.

As an embodiment, the recovered channel parameter comprises at least one channel matrix.

As an embodiment, the recovered channel parameter comprises at least one eigenvector.

As an embodiment, the first encoder is used for compressing the first pre-compressed CSI to reduce air interface overheads, and the first decoder is used for decompressing to recover the first pre-compressed CSI as much as possible.

As an embodiment, the first decoder is an inverse function of the first encoder.

As an embodiment, the first decoder is a decoder corresponding to the first encoder.

As an embodiment, the first compressed CSI is used for generating the first CSI.

As an embodiment, the first CSI comprises the first compressed CSI.

As an embodiment, the first compressed CSI is used as an input of the first decoder by the target recipient of the first CSI set for recovering a channel parameter.

As an embodiment, the first compressed CSI is based on a non-codebook.

As an embodiment, the first compressed CSI comprises non-codebook-based precoding information.

As an embodiment, the first compressed CSI is used for determining at least one precoding matrix.

As an embodiment, the first compressed CSI is used for determining at least one channel matrix.

As an embodiment, the first compressed CSI indicates at least one channel matrix.

As an embodiment, the first compressed CSI is used for determining a relative phase, amplitude, or coefficient between at least two antenna ports.

As an embodiment, the first compressed CSI is used for determining at least one eigenvector.

As an embodiment, an output of the first encoder comprises the first compressed CSI.

As an embodiment, the first encoder sequentially outputs each element in the first compressed CSI.

As an embodiment, the first compressed CSI is an output of the first encoder.

## Embodiment 7

Embodiment 7 illustrates a schematic diagram of an artificial intelligence- or machine learning-based processing system according to an embodiment of the present application, as shown in FIG. 7. FIG. 7 comprises a second processor, a third processor, a fourth processor and a fifth processor.

In embodiment 7, the second processor sends a first dataset to the third processor and sends a second dataset to the fourth processor; the third processor generates a target first-type parameter set according to the first dataset, and the third processor sends the generated target first-type parameter set to the fourth processor; and the fourth processor processes the second dataset using the target first-type parameter set to obtain a first-type output, and the fourth processor sends the first-type output to the fifth processor. In FIG. 7, a first-type feedback and a second-type feedback are optional.

As an embodiment, the fourth processor comprises the first encoder.

As an embodiment, the first encoder comprises the fourth processor.

As an embodiment, the fifth processor comprises the first decoder.

As an embodiment, the first decoder comprises the fifth processor.

As an embodiment, the fourth processor sends the first-type feedback to the third processor, and the first-type feedback is used for triggering recalculation or updating of the target first-type parameter set.

As an embodiment, the fifth processor sends the second-type feedback to the second processor, and the second-type feedback is used for generating the first dataset or the second dataset, or the second-type feedback is used for triggering sending of the first dataset or the second dataset.

As an embodiment, the second processor generates the first dataset and the second dataset according to measurement for a first-type radio signal, and the first-type radio signal comprises a downlink RS.

As an embodiment, the fourth processor belongs to the first node and the fifth processor belongs to the second node.

As an embodiment, the first compressed CSI belongs to the first-type output.

As an embodiment, the first pre-compressed CSI belongs to the second dataset.

As an embodiment, the third processor belongs to the first node.

The above embodiment avoids transmitting the first dataset to the second node.

As an embodiment, the third processor belongs to the second node.

The above embodiment supports joint training and optimizes system performance.

As an embodiment, the first dataset comprises training data, the second dataset comprises inference data, the third processor is used for model training, and a trained model is described by the target first-type parameter set.

The above description of training is applicable to the first encoder and the first decoder in the present application.

As an embodiment, the fourth processor constructs a model according to the target first-type parameter set, and then inputs the second dataset into the constructed model to obtain the first-type output.

As an embodiment, the first encoder is described by the target first-type parameter set.

As an embodiment, the target first-type parameter set is used for constructing the first encoder.

As an embodiment, at least part of the first encoder is described by the target first-type parameter set.

As an embodiment, the target first-type parameter set is used for constructing at least part of the first encoder.

As an embodiment, a part of the first encoder for compression is described by the target first-type parameter set.

As an embodiment, the target first-type parameter set is used for constructing a part of the first encoder for compression.

As an embodiment, a part of the first encoder for generating compressed CSI is described by the target first-type parameter set.

As an embodiment, the target first-type parameter set is used for constructing a part of the first encoder for generating compressed CSI.

As an embodiment, a part of the first encoder for quantizing compressed CSI is also described by the target first-type parameter set.

As an embodiment, the target first-type parameter set is also used for constructing a part of the first encoder for quantizing compressed CSI.

As an embodiment, the fourth processor comprises the second decoder.

As an embodiment, the fourth processor generates a recovery dataset according to the first-type output, and an error between the recovery dataset and the second dataset is used for generating the first-type feedback.

As a sub-embodiment of the above embodiment, generation of the recovery dataset adopts a method similar to the second decoder.

As an embodiment, the first-type feedback is used for reflecting the performance of the trained model; and when the performance of the trained model cannot meet requirements, the third processor recalculates the target first-type parameter set.

As an embodiment, when the error is too large or has not been updated for too long, the performance of the trained model is considered as failing to meet the requirements.

As an embodiment, the fourth processor belongs to a second node, and the first node reports the target first-type parameter set to the second node.

As an embodiment, the target first-type parameter set comprises: one or more of convolution kernel size, number of convolutional layers, convolution stride, pooling kernel size, pooling kernel stride, pooling function, activation function, or number of feature maps.

As an embodiment, the target first-type parameter set comprises: one or more of a convolution kernel, a pooling kernel, a pooling function, an activation function, parameters of the pooling function, or parameters of the activation function.

As an embodiment, the at least part of parameters of the first encoder comprise the target first-type parameter set.

## Embodiment 8

Embodiment 8 illustrates a schematic diagram of a priority of a first CSI report depending on a first ID according to an embodiment of the present application, as shown in FIG. 8.

In embodiment 8, a priority of the first CSI report depends on a first ID, and the first ID is associated with the first encoder.

As an embodiment, the first ID is a real number.

As an embodiment, the first ID is an integer.

As an embodiment, the first ID is a non-negative integer.

As an embodiment, the first ID is a character string.

As an embodiment, the first ID comprises an integer.

As an embodiment, the first ID comprises a character string.

As an embodiment, the first ID comprises an integer and a character string.

As an embodiment, the first ID depends on the first encoder.

As an embodiment, the first encoder depends on the first ID.

As an embodiment, the first ID is used for identifying the first encoder.

As an embodiment, the first ID is used for determining the first encoder.

As an embodiment, parameters of the first encoder comprise the first ID.

As an embodiment, the first ID is used for identifying the first encoder.

As an embodiment, the first ID is used for determining the first encoder from a plurality of encoders.

As an embodiment, each encoder in the plurality of encoders is a candidate for a generator of the CSI for the first CSI report.

As an embodiment, each encoder in the plurality of encoders is a candidate for a generator of compressed CSI comprised in the CSI for the first CSI report.

As an embodiment, the benefits of the above method comprise that: determination of the priority of the first CSI report is optimized according to the first encoder, and the performance of the CSI report is optimized.

As an embodiment, the first ID is used for determining a decoder.

As an embodiment, the first ID is used for determining a decoder corresponding to the first encoder.

As an embodiment, the first ID is used for identifying a decoder.

As an embodiment, the first ID is used for identifying a decoder corresponding to the first encoder.

As an embodiment, the first ID is used for determining a first decoder from a plurality of decoders, and the first decoder is a decoder corresponding to the first encoder.

As an embodiment, each decoder in the plurality of decoders is a candidate for a generator of a channel parameter recovered based on compressed CSI comprised in the CSI for the first CSI report.

As an embodiment, the benefits of the above method comprise that: different encoders are supported to correspond to the same decoder, thereby reducing the implementation complexity and increasing the flexibility.

As an embodiment, the first ID is used for determining an encoder-decoder pair.

As an embodiment, the first ID is used for identifying an encoder-decoder pair.

As an embodiment, the first ID is used for determining a pair of the first encoder-a decoder corresponding to the first encoder.

As an embodiment, the first ID is used for identifying a pair of the first encoder-a decoder corresponding to the first encoder.

As an embodiment, the first ID is used for determining a first encoder-decoder pair from a plurality of encoder-decoder pairs; and an encoder comprised in the first encoder-decoder pair is the first encoder.

As an embodiment, an encoder in each encoder-decoder pair in the plurality of encoder-decoder pairs is a candidate for a generator of compressed CSI comprised in the CSI for the first CSI report.

As an embodiment, a decoder in each encoder-decoder pair in the plurality of encoder-decoder pairs is a candidate for a generator of a channel parameter recovered by compressed CSI comprised in the CSI for the first CSI report.

As an embodiment, for each encoder-decoder pair in the plurality of encoder-decoder pairs, a decoder in this encoder-decoder pair is a generator of a channel parameter recovered based on an output of an encoder in this encoder-decoder pair.

As an embodiment, the benefits of the above method comprise that: the priority of the first CSI report simultaneously depends on an encoder and a decoder or their related information, thereby further optimizing the performance of the CSI reporting and CSI recovery.

As an embodiment, the first ID is a model ID.

As an embodiment, the first ID is used for identifying a model.

As an embodiment, the benefits of the above method comprise that: signaling design is simplified by a model ID.

As an embodiment, the first ID is used for identifying a model of the first encoder.

As an embodiment, a model identified by the first ID is used for constructing the first encoder.

As an embodiment, the first ID is used for identifying a model of a decoder corresponding to the first encoder.

As an embodiment, a model identified by the first ID is used for constructing a decoder corresponding to the first encoder.

As an embodiment, the first ID is used for identifying a model pair.

As an embodiment, the first ID is used for identifying a pair of a model of the first encoder-a model of a decoder corresponding to the first encoder.

As an embodiment, one model in a model pair identified by the first ID is used for constructing the first encoder, and the other model is used for constructing a decoder corresponding to the first encoder.

As an embodiment, the first ID is used for determining a first model from a plurality of models.

As an embodiment, the plurality of models are used for constructing a plurality of encoders respectively, each encoder in the plurality of encoders is a candidate for a generator of the CSI for the first CSI report, and the first model is used for constructing the first encoder.

As an embodiment, the plurality of models are used for constructing a plurality of encoders respectively, each encoder in the plurality of encoders is a candidate for a generator of compressed CSI comprised in the CSI for the first CSI report, and the first model is used for constructing the first encoder.

As an embodiment, the plurality of models are used for constructing a plurality of decoders respectively, each decoder in the plurality of decoders is a candidate for a generator of a channel parameter recovered based on compressed CSI comprised in the CSI for the first CSI report, and the first model is used for constructing a decoder corresponding to the first encoder.

As an embodiment, the first ID is used for determining a first model pair from a plurality of model pairs, and each model pair in the plurality of model pairs comprises two models, wherein one model is used for constructing an encoder, wherein the other model is used for constructing a decoder; and an encoder and a decoder constructed by the first model pair are the first encoder and a decoder corresponding to the first encoder respectively.

As a sub-embodiment of the above embodiment, the one encoder is a candidate for a generator of compressed CSI comprised in the CSI for the first CSI report.

As a sub-embodiment of the above embodiment, the one decoder is a candidate for a generator of a channel parameter recovered based on compressed CSI comprised in the CSI for the first CSI report.

As a sub-embodiment of the above embodiment, the one decoder is a generator of a channel parameter recovered based on an output of the one encoder.

As an embodiment, the plurality of models are obtained through training respectively.

As an embodiment, the plurality of models are described by a plurality of parameter sets respectively, and the plurality of parameter sets are obtained through training respectively.

As an embodiment, the plurality of model pairs are obtained through training respectively.

As an embodiment, the plurality of model pairs are described by a plurality of parameter sets respectively, and the plurality of parameter sets are obtained through training respectively.

As an embodiment, the plurality of parameter sets comprise the target first-type parameter set in embodiment 7 respectively.

As an embodiment, any parameter set of the plurality of parameter sets comprises: one or more of convolution kernel size, number of convolutional layers, convolution stride, pooling kernel size, pooling kernel stride, pooling function, activation function, or number of feature maps.

As an embodiment, any parameter set of the plurality of parameter sets comprises: one or more of a convolution kernel, a pooling kernel, a pooling function, an activation function, parameters of the pooling function, or parameters of the activation function.

As an embodiment, the first ID is a dataset ID.

As an embodiment, the first ID is used for identifying a first dataset.

As an embodiment, the first dataset comprises training data.

As an embodiment, the benefits of the above method comprise that: signaling design is simplified by a dataset ID.

As an embodiment, training for obtaining the first encoder is based on the first dataset.

As an embodiment, training for obtaining a decoder corresponding to the first encoder is based on the first dataset.

As an embodiment, both the training for obtaining the first encoder and the training for obtaining the decoder corresponding to the first encoder are based on the first dataset.

As an embodiment, the first ID is used for determining the first dataset from a plurality of datasets.

As an embodiment, each dataset of the plurality of datasets is used for a plurality of trainings respectively, and each training of the plurality of trainings is used for obtaining one candidate for a generator of compressed CSI comprised in the CSI for the first CSI report.

As an embodiment, each dataset of the plurality of datasets is used for a plurality of trainings respectively, and each training of the plurality of trainings is used for obtaining one candidate for a generator of channel information recovered based on compressed CSI comprised in the CSI for the first CSI report.

As an embodiment, each dataset of the plurality of datasets is used for a plurality of trainings respectively, each training of the plurality of trainings is used for obtaining one encoder and one decoder, the one encoder is one candidate for a generator of compressed CSI comprised in the CSI for the first CSI report, and the one decoder is a generator of channel information recovered based on an output of the one encoder.

As an embodiment, a decoder corresponding to the first encoder refers to a generator of a channel parameter recovered based on the first encoder.

As an embodiment, a decoder corresponding to the first encoder is obtained based on training.

As an embodiment, the first ID is indicated to the first node by a target recipient of the first CSI set.

As an embodiment, the first signaling indicates the first ID.

As an embodiment, the first signaling indicates the first encoder by indicating the first ID.

As an embodiment, the benefits of the above method comprise that: the indication is more flexible and the performance is optimized.

As an embodiment, the benefits of the above method comprise that: it is convenient for a base station to optimize the global performance.

As an embodiment, the first node determines the first ID by itself.

As an embodiment, the first node determines the first ID by itself from a plurality of IDs.

As an embodiment, the benefits of the above method comprise that: a UE flexibly selects the first ID according to actual demands, the performance is optimized and the method is better applicable to different terminals.

As an embodiment, the plurality of IDs are all associated with the first CSI report.

As an embodiment, the plurality of IDs are all associated with the first RS resource set.

As an embodiment, the meaning of one ID being associated with one CSI report comprises that: an encoder identified by the one ID can be used for generating CSI for the one CSI report.

As an embodiment, the meaning of one ID being associated with one CSI report comprises that: an encoder constructed by a model identified by the one ID can be used for generating CSI for the one CSI report.

As an embodiment, the meaning of one ID being associated with one CSI report comprises that: the one ID identifies one dataset, the one dataset is used for training one encoder, and the one encoder can be used for generating CSI for the one CSI report.

As an embodiment, the meaning of one ID being associated with one CSI report comprises that: a decoder identified by the one ID can be used for recovering a channel parameter based on CSI for the one CSI report.

As an embodiment, the meaning of one ID being associated with one CSI report comprises that: a decoder constructed by a model identified by the one ID can be used for recovering a channel parameter based on CSI for the one CSI report.

As an embodiment, the meaning of one ID being associated with one CSI report comprises that: the one ID identifies one dataset, the one dataset is used for training one decoder, and the one decoder can be used for recovering a channel parameter based on CSI for the one CSI report.

As an embodiment, the meaning of one ID being associated with one RS resource set comprises that: channel measurement obtained based on the one RS resource set can be used as an input of an encoder identified by the one ID.

As an embodiment, the meaning of one ID being associated with one RS resource set comprises that: channel measurement obtained based on the one RS resource set can be used as an input of an encoder constructed by a model identified by the one ID.

As an embodiment, the meaning of one ID being associated with one RS resource set comprises that: the one ID identifies one dataset, the one dataset is used for training one encoder, and channel measurement obtained based on the one RS resource set can be used as an input of the encoder constructed by a model identified by the one ID.

As an embodiment, the meaning of one RS resource set being associated with one encoder comprises that: channel measurement obtained based on the one RS resource set is used for calculating one CSI, and a decoder identified by the one ID can be used for recovering a channel parameter based on the one CSI.

As an embodiment, the meaning of one RS resource set being associated with one encoder comprises that: channel measurement obtained based on the one RS resource set is used for calculating one CSI, and a decoder constructed by a model identified by the one ID can be used for recovering a channel parameter based on the one CSI.

As an embodiment, the meaning of one RS resource set being associated with one encoder comprises that: channel measurement obtained based on the one RS resource set is used for calculating one CSI, the one ID identifies one dataset, the one dataset is used for training one decoder, and the one decoder can be used for recovering a channel parameter based on the one CSI.

As an embodiment, the first ID is associated with a size of an output of the first encoder.

As an embodiment, a size of an output of the first encoder is associated with the first ID.

As an embodiment, a size of an output of the first encoder depends on the first ID.

As an embodiment, the first ID is used for determining a size of an output of the first encoder.

As an embodiment, the first ID is used for indicating a size of an output of the first encoder.

As an embodiment, a ratio of a size of an output of the first encoder to a size of an input is associated with the first ID.

As an embodiment, a ratio of a size of an output of the first encoder to a size of an input depends on the first ID.

As an embodiment, the first ID is used for determining a ratio of a size of an output of the first encoder to a size of an input.

As an embodiment, the first ID is used for indicating a ratio of a size of an output of the first encoder to a size of an input.

As an embodiment, the first ID is associated with a compression rate of the first encoder.

As an embodiment, a compression rate of the first encoder is associated with the first ID.

As an embodiment, a compression rate of the first encoder depends on the first ID.

As an embodiment, the first ID is used for determining a compression rate of the first encoder.

As an embodiment, the first ID is used for indicating a compression rate of the first encoder.

As an embodiment, the essence of the above method comprises that: a priority of the first CSI report is associated with a size of an output of the first encoder by depending on the first ID, and the benefits of the above method comprise that: the method supports adjustment of the priority of the first CSI report by adjusting the size of the output of the first encoder, better balances the accuracy and overheads of the CSI report, and optimizes the overall system performance.

As an embodiment, a size of an output of the first encoder refers to: a size of one output of the first encoder.

As an embodiment, a size of an output of the first encoder refers to: a payload size of the output of the first encoder.

As an embodiment, a size of an output of the first encoder refers to: a payload size of the output per layer of the first encoder.

As an embodiment, a size of an output of the first encoder refers to: the number of elements comprised in the output of the first encoder.

As an embodiment, a size of an output of the first encoder refers to: the number of scalars comprised in the output of the first encoder.

As an embodiment, a size of an output of the first encoder refers to: the number of vectors comprised in the output of the first encoder.

As an embodiment, a size of an output of the first encoder refers to: the number of bits comprised in the output of the first encoder.

As an embodiment, a size of an output of the first encoder refers to: a size of the output per layer of the first encoder.

As an embodiment, a size of an output of the first encoder refers to: the number of elements comprised in the output per layer of the first encoder.

As an embodiment, a size of an output of the first encoder refers to: the number of scalars comprised in the output per layer of the first encoder.

As an embodiment, a size of an output of the first encoder refers to: the number of vectors comprised in the output per layer of the first encoder.

As an embodiment, a size of an output of the first encoder refers to: the number of bits comprised in the output per layer of the first encoder.

As an embodiment, a size of an input of the first encoder refers to: a size of one input of the first encoder.

As an embodiment, a size of an input of the first encoder refers to: the number of elements comprised in the input of the first encoder.

As an embodiment, a size of an input of the first encoder refers to: the number of scalars comprised in the input of the first encoder.

As an embodiment, a size of an input of the first encoder refers to: the number of vectors comprised in the input of the first encoder.

As an embodiment, a size of an input of the first encoder refers to: a size of the input per layer of the first encoder.

As an embodiment, a size of an input of the first encoder refers to: the number of elements comprised in the input per layer of the first encoder.

As an embodiment, a size of an input of the first encoder refers to: the number of scalars comprised in the input per layer of the first encoder.

As an embodiment, a size of an input of the first encoder refers to: the number of vectors comprised in the input per layer of the first encoder.

As an embodiment, a priority of the first CSI report depends on the first ID, and depends on one or more of a time domain characteristic, a report quantity, a cell index, or CSI-ReportConfigId of the first CSI report.

As an embodiment, a priority of the first CSI report depends on the first ID, and depends on a time domain characteristic, a report quantity, a cell index, and CSI-ReportConfigId of the first CSI report.

**Embodiment 9**

Embodiment 9 illustrates a schematic diagram of a first value according to an embodiment of the present application, as shown in FIG. 9.

In embodiment 9, a first value depends on at least one of a second parameter, a third parameter, a fourth parameter, a fifth parameter, or a sixth parameter, and a priority of the first CSI report depends on the first value; the second parameter depends on the first encoder; the third parameter, the fourth parameter, the fifth parameter and the sixth parameter depend on the time domain characteristic, the report quantity, the cell index and CSI-ReportConfigId of the first CSI report respectively.

As an embodiment, the smaller the first value, the higher the priority of the first CSI report.

As an embodiment, the larger the first value, the higher the priority of the first CSI report.

As an embodiment, the first value depends on the second parameter, the third parameter, the fourth parameter, the fifth parameter and the sixth parameter.

As an embodiment, the first value is calculated according to a specific formula based on the second parameter, the third parameter, the fourth parameter, the fifth parameter and the sixth parameter.

As an embodiment, the first value is linearly associated with the second parameter, the third parameter, the fourth parameter, the fifth parameter and the sixth parameter respectively.

As a sub-embodiment of the above embodiment, linear coefficients between the first value, and the second parameter, the third parameter, the fourth parameter, the fifth parameter, and the sixth parameter are positive integers respectively.

As an embodiment, if the first CSI report is an aperiodic CSI report on PUSCH, the third parameter is equal to 0.

As an embodiment, if the first CSI report is a semi-persistent CSI report on PUSCH, the third parameter is equal to 1.

As an embodiment, if the first CSI report is a semi-persistent CSI report on PUCCH, the third parameter is equal to 2.

As an embodiment, if the first CSI report is a periodic CSI report on PUCCH, the third parameter is equal to 3.

As an embodiment, if a report quantity of the first CSI report comprises Layer 1 Reference Signal Received Power (L1-RSRP) or Layer 1 Signal-to-Interference and Noise Ratio (L1-SINR), the fourth parameter is equal to 0.

As an embodiment, if a report quantity of the first CSI report does not comprise L1-RSRP or L1-SINR, the fourth parameter is equal to 1.

As an embodiment, the fifth parameter is equal to a cell index of the first CSI report.

As an embodiment, the sixth parameter is equal to CSI-ReportConfigId of the first CSI report.

As an embodiment, the second parameter depends on the first ID.

As an embodiment, the second parameter is equal to the first ID.

As an embodiment, if the first ID is greater than a given threshold, the second parameter is equal to a first integer; if the first ID is less than the given threshold, the second parameter is equal to a second integer; the given threshold is an integer, and the given threshold is configurable or fixed; and the first integer is not equal to the second integer.

As an embodiment, if the first ID is equal to a first reference value, the second parameter is equal to a first integer; if the first ID is not equal to the first reference value, the second parameter is equal to a second integer; the first reference value is configurable or fixed; the first integer is not equal to the second integer.

As a sub-embodiment of the above embodiment, the first reference value is an integer.

As a sub-embodiment of the above embodiment, the first reference value is a character string.

As an embodiment, the first integer and the second integer are configurable respectively.

As an embodiment, the first integer and the second integer are fixed respectively.

As an embodiment, the first integer is equal to 0, and the second integer is equal to 1.

As an embodiment, the first integer is equal to 1, and the second integer is equal to 0.

As an embodiment, the second parameter depends on a size of the first compressed CSI.

As an embodiment, the second parameter depends on a payload size of the first compressed CSI.

As an embodiment, the second parameter depends on a payload size per layer in the first compressed CSI.

As an embodiment, the second parameter depends on a ratio between a payload size of the first compressed CSI and a payload size of the first pre-compressed CSI.

As an embodiment, the second parameter depends on a ratio between a payload size per layer in the first compressed CSI and a payload size per layer in the first pre-compressed CSI.

As an embodiment, the second parameter is equal to a size of the first compressed CSI.

As an embodiment, the second parameter is equal to a payload size of the first compressed CSI.

As an embodiment, the second parameter is equal to a payload size per layer in the first compressed CSI.

As an embodiment, the second parameter is equal to a ratio between a payload size of the first compressed CSI and a payload size of the first pre-compressed CSI.

As an embodiment, the second parameter is equal to a ratio between a payload size per layer in the first compressed CSI and a payload size per layer in the first pre-compressed CSI.

As an embodiment, the second parameter is equal to a compression rate of the first encoder.

As an embodiment, if a second reference value is greater than a given threshold, the second parameter is equal to a first integer; if the second reference value is less than the given threshold, the second parameter is equal to a second integer; the given threshold is an integer, and the given threshold is configurable or fixed; and the first integer is not equal to the second integer.

As a sub-embodiment of the above embodiment, the second reference value is equal to a size of the first compressed CSI.

As a sub-embodiment of the above embodiment, the second reference value is equal to a payload size of the first compressed CSI.

As a sub-embodiment of the above embodiment, the second reference value is equal to a payload size per layer in the first compressed CSI.

As a sub-embodiment of the above embodiment, the second reference value is equal to a ratio between a payload size of the first compressed CSI and a payload size of the first pre-compressed CSI.

As a sub-embodiment of the above embodiment, the second reference value is equal to a ratio between a payload size per layer in the first compressed CSI and a payload size per layer in the first pre-compressed CSI.

As a sub-embodiment of the above embodiment, the second reference value is equal to a compression rate of the first encoder.

As an embodiment, the second parameter depends on the first parameter.

As an embodiment, the second parameter is equal to the first parameter.

As an embodiment, if the first parameter is greater than a given threshold, the second parameter is equal to a first integer; if the first parameter is less than the given threshold, the second parameter is equal to a second integer; the given threshold is a real number, and the given threshold is configurable or fixed; and the first integer is not equal to the second integer.

As an embodiment, if the first parameter is equal to a given threshold, the second parameter is equal to a first integer; if the first parameter is not equal to the given threshold, the second parameter is equal to a second integer; the given threshold is a real number, and the given threshold is configurable or fixed; and the first integer is not equal to the second integer.

### Embodiment 10

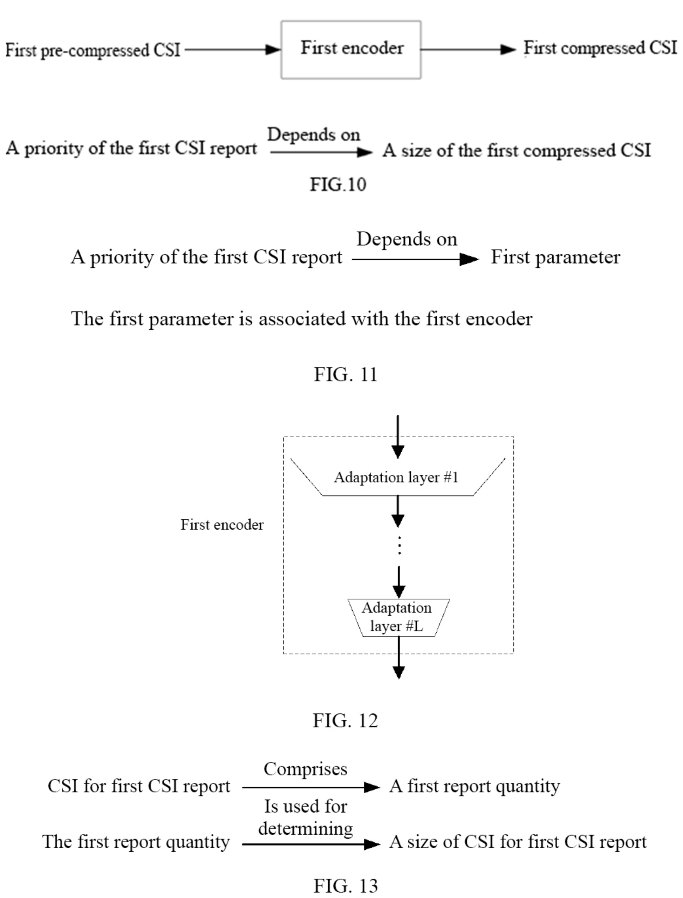

Embodiment 10 illustrates a schematic diagram of a first pre-compressed CSI, a first encoder and a first compressed CSI according to an embodiment of the present application, as shown in FIG. 10.

In embodiment 10, the first pre-compressed CSI is used as an input of the first encoder for generating first compressed CSI, and a priority of the first CSI report depends on a size of the first compressed CSI.

As an embodiment, the CSI for the first CSI report depends on the first compressed CSI.

As an embodiment, the first compressed CSI is used for generating the CSI for the first CSI report.

As an embodiment, the CSI for the first CSI report is the first compressed CSI.

As an embodiment, compressed CSI comprised in the CSI for the first CSI report depends on the first compressed CSI.

As an embodiment, the first compressed CSI is used for generating compressed CSI comprised in the CSI for the first CSI report.

As an embodiment, the first compressed CSI is compressed CSI comprised in the CSI for the first CSI report.

As an embodiment, the first pre-compressed CSI is inputted into the first encoder, and an output of the first encoder is used for generating the first compressed CSI.

As an embodiment, the first pre-compressed CSI is inputted into the first encoder, and an output of the first encoder comprises the first compressed CSI.

As an embodiment, the first pre-compressed CSI is inputted into the first encoder, and an output of the first encoder is the first compressed CSI.

As an embodiment, the first encoder sequentially outputs each element in the first compressed CSI.

As an embodiment, the first compressed CSI is based on a non-codebook.

As an embodiment, the first compressed CSI comprises non-codebook-based precoding information.

As an embodiment, the first compressed CSI is used for determining at least one precoding matrix.

As an embodiment, the first compressed CSI indicates at least one precoding matrix.

As an embodiment, the precoding matrix is in a spatial-frequency domain.

As an embodiment, the precoding matrix is in an angular-delay domain projection.

As an embodiment, the first compressed CSI comprises PMI.

As an embodiment, the first compressed CSI is used for determining at least one channel matrix.

As an embodiment, the first compressed CSI indicates at least one channel matrix.

As an embodiment, the first compressed CSI is used for determining at least one raw channel matrix.

As an embodiment, the first compressed CSI indicates at least one raw channel matrix.

As an embodiment, the channel matrix is in a spatial-frequency domain.

As an embodiment, the channel matrix is in an angular-delay domain.

As an embodiment, the precoding matrix comprises $V_w$, $w = 1, ..., W$ in embodiment 1.

As an embodiment, the channel matrix comprises $H_w$, $w = 1, ... , W$ in embodiment 1.

As an embodiment, the first compressed CSI is used for determining a relative phase, amplitude, or coefficient between at least two antenna ports.

As an embodiment, the first compressed CSI is used for determining at least one eigenvector.

As an embodiment, the first compressed CSI is used for determining at least one eigenvalue.

As an embodiment, the first compressed CSI comprises compressed CSI for only one layer.

As an embodiment, the first compressed CSI comprises compressed CSI for a plurality of layers.

As an embodiment, the first compressed CSI comprises a plurality of scalars.

As an embodiment, the first compressed CSI is composed of a plurality of scalars.

As an embodiment, each scalar in the first compressed CSI is a complex number.

As an embodiment, each scalar in the first compressed CSI is a real number.

As an embodiment, the first compressed CSI is a vector.

As an embodiment, the first compressed CSI comprises a plurality of vectors.

As an embodiment, the first compressed CSI is composed of a plurality of vectors.

As an embodiment, each element of each vector in the first compressed CSI is a complex number.

As an embodiment, each element of each vector in the first compressed CSI is a real number.

As an embodiment, any two vectors in the first compressed CSI have the same dimension.

As an embodiment, the first compressed CSI comprises two vectors having the same dimension.

As an embodiment, the first compressed CSI comprises two vectors having different dimensions.

As an embodiment, a dimension of a vector refers to: the number of elements comprised in the vector.

As an embodiment, a priority of the first CSI report depends on a payload size of the first compressed CSI.

As an embodiment, a priority of the first CSI report depends on a payload size per layer in the first compressed CSI.

As an embodiment, a priority of the first CSI report depends on a ratio between a payload size of the first compressed CSI and a payload size of the first pre-compressed CSI.

As an embodiment, a priority of the first CSI report depends on a ratio between a payload size per layer in the first compressed CSI and a payload size per layer in the first pre-compressed CSI.

As an embodiment, a priority of the first CSI report depends on a compression rate of the first encoder.

As an embodiment, the essence of the above method comprises that: a priority of the first CSI report is determined according to a CSI compression rate, thereby improving the fairness and optimizing the system performance.

As an embodiment, a priority of the first CSI report depends on a payload size of the first compressed CSI, and depends on one or more of a time domain characteristic, a report quantity, a cell index or CSI-ReportConfigId of the first CSI report.

As an embodiment, a priority of the first CSI report depends on a payload size per layer in the first compressed CSI, and depends on one or more of a time domain characteristic, a report quantity, a cell index or CSI-ReportConfigId of the first CSI report.

As an embodiment, a priority of the first CSI report depends on a ratio between a payload size of the first compressed CSI and a payload size of the first pre-compressed CSI, and depends on one or more of a time domain characteristic, a report quantity, a cell index or CSI-ReportConfigId of the first CSI report.

As an embodiment, a priority of the first CSI report depends on a ratio between a payload size per layer in the first compressed CSI and a payload size per layer in the first pre-compressed CSI, and depends on one or more of a time domain characteristic, a report quantity, a cell index or CSI-ReportConfigId of the first CSI report.

As an embodiment, a priority of the first CSI report depends on a compression rate of the first encoder, and depends on one or more of a time domain characteristic, a report quantity, a cell index or CSI-ReportConfigId of the first CSI report.

As an embodiment, a priority of the first CSI report depends on a payload size of the first compressed CSI, and depends on a time domain characteristic, a report quantity, a cell index and CSI-ReportConfigId of the first CSI report.

As an embodiment, a priority of the first CSI report depends on a payload size per layer in the first compressed CSI, and depends on a time domain characteristic, a report quantity, a cell index and CSI-ReportConfigId of the first CSI report.

As an embodiment, a priority of the first CSI report depends on a ratio between a payload size of the first compressed CSI and a payload size of the first pre-compressed CSI, and depends on a time domain characteristic, a report quantity, a cell index and CSI-ReportConfigId of the first CSI report.

As an embodiment, a priority of the first CSI report depends on a ratio between a payload size per layer in the first compressed CSI and a payload size per layer in the first pre-compressed CSI, and depends on a time domain characteristic, a report quantity, a cell index and CSI-ReportConfigId of the first CSI report.

As an embodiment, a priority of the first CSI report depends on a compression rate of the first encoder, and depends on a time domain characteristic, a report quantity, a cell index and CSI-ReportConfigId of the first CSI report.

As an embodiment, a size of the first compressed CSI refers to: a payload size of the first compressed CSI.

As an embodiment, a size of the first compressed CSI refers to: the number of elements comprised in the first compressed CSI.

As an embodiment, a size of the first compressed CSI refers to: the number of scalars comprised in the first compressed CSI.

As an embodiment, a size of the first compressed CSI refers to: the number of vectors comprised in the first compressed CSI.

As an embodiment, a size of the first compressed CSI refers to: the number of bits comprised in the first compressed CSI.

As an embodiment, a size of the first compressed CSI refers to: a payload size per layer of the first compressed CSI.

As an embodiment, a size of the first compressed CSI refers to: the number of elements comprised in CSI per layer of the first compressed CSI.

As an embodiment, a size of the first compressed CSI refers to: the number of scalars comprised in CSI per layer of the first compressed CSI.

As an embodiment, a size of the first compressed CSI refers to: the number of vectors comprised in CSI per layer of the first compressed CSI.

As an embodiment, a size of the first compressed CSI refers to: the number of bits comprised in CSI per layer of the first compressed CSI.

As an embodiment, a size of the first pre-compressed CSI refers to: a payload size of the first pre-compressed CSI.

As an embodiment, a size of the first pre-compressed CSI refers to: the number of elements comprised in the first pre-compressed CSI.

As an embodiment, a size of the first pre-compressed CSI refers to: the number of scalars comprised in the first pre-compressed CSI.

As an embodiment, a size of the first pre-compressed CSI refers to: the number of vectors comprised in the first pre-compressed CSI.

As an embodiment, a size of the first pre-compressed CSI refers to: a payload size per layer of the first pre-compressed CSI.

As an embodiment, a size of the first pre-compressed CSI refers to: the number of elements comprised in CSI per layer of the first pre-compressed CSI.

As an embodiment, a size of the first pre-compressed CSI refers to: the number of scalars comprised in CSI per layer of the first pre-compressed CSI.

As an embodiment, a size of the first pre-compressed CSI refers to: the number of vectors comprised in CSI per layer of the first pre-compressed CSI.

## Embodiment 11

Embodiment 11 illustrates a schematic diagram of a priority of a first CSI report depending on a first parameter according to an embodiment of the present application, as shown in FIG. 11.

In embodiment 11, a priority of the first CSI report depends on a first parameter, and the first parameter is associated with the first encoder.

As an embodiment, the first parameter is a real number.

As an embodiment, the first parameter is an integer.

As an embodiment, the first parameter is a non-negative integer.

As an embodiment, the first parameter is a character string.

As an embodiment, the first parameter comprises an integer.

As an embodiment, the first parameter comprises a character string.

As an embodiment, the first parameter comprises an integer and a character string.

As an embodiment, the first parameter depends on the first encoder.

As an embodiment, the first encoder depends on the first parameter.

As an embodiment, the first parameter is used for determining the first encoder.

As an embodiment, the first encoder is used for determining the first parameter.

As an embodiment, parameters of the first encoder comprise the first parameter.

As an embodiment, the first parameter is associated with a size of an output of the first encoder.

As an embodiment, the first parameter is associated with a ratio of a size of an output of the first encoder to a size of an input.

As an embodiment, the first parameter is associated with a compression rate of the first encoder.

As an embodiment, a compression rate of the first encoder depends on the first parameter.

As an embodiment, the first parameter is a parameter of the first encoder.

As an embodiment, the first parameter participates in constituting the first encoder.

As an embodiment, the first parameter participates in describing the first encoder.

As an embodiment, the at least part of parameters of the first encoder comprise the first parameter.

As an embodiment, the first parameter is obtained through training.

As an embodiment, the benefits of the above method comprise that: further performance improvement through joint optimization is supported.

As an embodiment, the at least part of parameters of the first encoder do not comprise the first parameter.

As an embodiment, the first parameter is not obtained through training.

As an embodiment, the benefits of the above method comprise that: the complexity is simplified.

As an embodiment, the first parameter is associated with an output of the first encoder.

As an embodiment, an output of the first encoder depends on the first parameter.

As an embodiment, the first parameter is associated with the number of adaptation layers of the first encoder.

As an embodiment, the first parameter is equal to the number of adaptation layers of the first encoder.

As an embodiment, each adaptation layer has a compression function.

As an embodiment, each adaptation layer has a function of compressing an input thereof and then outputting a compressed result.

As an embodiment, each adaptation layer comprises at least one convolutional layer.

As an embodiment, each adaptation layer comprises at least one convolutional layer and one pooling layer.

As an embodiment, at least two encoders in the plurality of encoders in embodiment 1 have different numbers of adaptation layers.

As an embodiment, any two encoders in the plurality of encoders in embodiment 1 have different numbers of adaptation layers.

As an embodiment, the essence of the above method comprises that: the plurality of encoders provide different compression rates; and the benefits of the above method comprise that: higher flexibility achieves different compromises between accuracy and overheads of CSI reports, and model training is simplified.

As an embodiment, the first encoder has a plurality of adaptation layers, and the plurality of adaptation layers are arranged in sequence.

As a sub-embodiment of the above embodiment, except for a first adaptation layer in the plurality of adaptation layers, an input of each other adaptation layer depends on an output of a previous adaptation layer.

As a sub-embodiment of the above embodiment, except for a last adaptation layer in the plurality of adaptation layers, an output of each other adaptation layer is used for an input of a next adaptation layer.

As a sub-embodiment of the above embodiment, the first parameter is used for determining outputs of adaptation layers, on which an output of the first encoder depends, in the plurality of adaptation layers.

As a sub-embodiment of the above embodiment, an output of the first encoder depends on outputs of only the first K adaptation layers in the plurality of adaptation layers, and the K depends on the first parameter.

As a reference embodiment of the above sub-embodiment, the M is equal to the first parameter.

As a reference embodiment of the above sub-embodiment, the K is equal to taking a modulus of the number of the plurality of adaptation layers after subtracting one from the first parameter, and then adding 1.

As a reference embodiment of the above sub-embodiment, the K is equal to the sum of the first parameter and an offset.

As a reference embodiment of the above sub-embodiment, the K is equal to a product of the first parameter and a factor.

As an embodiment, the essence of the above method comprises that: the first encoder has a scalable compression rate; and the benefits of the above method comprise that: one encoder satisfies accuracy and overhead requirements of different CSI reports, air interface overheads for model transmission are reduced, and model update and maintenance are simplified.

As an embodiment, the first encoder performs quantization, and the first parameter is associated with the quantization.

As an embodiment, the first parameter is associated with a quantization level of the quantization.

As an embodiment, a quantization level of the quantization is used for determining the first parameter.

As an embodiment, the first parameter is equal to a quantization level of the quantization.

As an embodiment, the quantization is scalar quantization, and the first parameter is equal to the number of bits to which each scalar is mapped through the quantization.

As an embodiment, the quantization is vector quantization, and the first parameter is equal to the number of bits to which each vector is mapped through the quantization.

As an embodiment, the first parameter is associated with a type of the quantization.

As an embodiment, candidates for the type of the quantization comprise scalar quantization and vector quantization.

As an embodiment, the first encoder performs puncturing, and the first parameter is associated with the puncturing.

As an embodiment, the first parameter is associated with a puncturing rate of the puncturing.

As an embodiment, the first parameter is associated with an output size of the puncturing.

As an embodiment, the first parameter is associated with a ratio of an output size to an input size of the puncturing.

As an embodiment, the first parameter is associated with a pattern of the puncturing.

As an embodiment, the first parameter is equal to a puncturing rate of the puncturing.

As an embodiment, the first parameter is equal to a ratio of an output size to an input size of the puncturing.

As an embodiment, the first encoder performs quantization or puncturing, and the first parameter is associated with the quantization or the puncturing.

As an embodiment, the essence of the above method comprises that: a priority of the first CSI report is prevented from depending on a CSI compression rate, CSI generation is simplified, UE processing is simplified, and meanwhile, a good balance can still be achieved between accuracy and overheads of CSI reports.

As an embodiment, the quantization or the puncturing is obtained through training.

As an embodiment, training used for obtaining the first encoder is also used for obtaining the quantization or the puncturing.

As an embodiment, the benefits of the above method comprise that: further performance improvement through joint optimization is supported.

As an embodiment, the quantization or the puncturing is not obtained through training.

As an embodiment, the quantization or the puncturing is independent of training used for obtaining the first encoder.

As an embodiment, training used for obtaining the first encoder is based on the quantization or the puncturing.

As an embodiment, the benefits of the above method comprise that: the complexity is simplified.

## Embodiment 12

Embodiment 12 illustrates a schematic diagram of a first encoder comprising a plurality of adaptation layers according to an embodiment of the present application, as shown in FIG. 12. In FIG. 12, the first encoder comprises L adaptation layers, i.e., adaptation layer #1, ..., #L.

As an embodiment, the first encoder has at least one adaptation layer.

As an embodiment, the first encoder has L adaptation layers.

As an embodiment, the L is a positive integer.

As an embodiment, the L is equal to 1.

As an embodiment, the L is greater than 1.

As an embodiment, each adaptation layer has a compression function.

As an embodiment, each adaptation layer has a function of compressing an input thereof and then outputting a compressed result.

As an embodiment, each adaptation layer comprises at least one convolutional layer.

As an embodiment, each adaptation layer comprises at least one convolutional layer and one pooling layer.

As an embodiment, the first encoder has L adaptation layers, and the L adaptation layers are arranged in sequence.

As an embodiment, except for a first adaptation layer in the L adaptation layers, an input of each other adaptation layer depends on an output of a previous adaptation layer.

As an embodiment, except for a last adaptation layer in the L adaptation layers, an output of each other adaptation layer is used for an input of a next adaptation layer.

**Embodiment 13**

Embodiment 13 illustrates a schematic diagram of a first report quantity according to an embodiment of the present application, as shown in FIG. 13.

In embodiment 13, the first CSI report comprises a first report quantity, and the first report quantity is used for determining a size of the CSI for the first CSI report.

As an embodiment, the first report quantity is used by a target recipient of the first CSI set for determining a size of the CSI for the first CSI report.

As an embodiment, the first report quantity indicates a size of the CSI for the first CSI report.

As an embodiment, the first report quantity explicitly indicates a size of the CSI for the first CSI report.

As an embodiment, the first report quantity explicitly indicates a size of the CSI for the first CSI report by indicating other information.

As an embodiment, the first report quantity does not belong to a report quantity defined in 3GPP Rel-17, nor does it belong to a report quantity defined in releases prior to 3GPP Rel-17.

As an embodiment, the first report quantity is used for determining the first encoder.

As an embodiment, the first report quantity indicates the first encoder.

As an embodiment, the first report quantity indicates a size of the CSI for the first CSI report by indicating the first encoder.

As an embodiment, the first report quantity indicates a decoder corresponding to the first encoder.

As an embodiment, the first report quantity indicates a size of the CSI for the first CSI report by indicating a decoder corresponding to the first encoder.

As an embodiment, the first report quantity is used for determining the first ID.

As an embodiment, the first report quantity indicates the first ID.

As an embodiment, the first report quantity is used for determining parameters of the first encoder.

As an embodiment, the first report quantity is used for determining a size of an output of the first encoder.

As an embodiment, the first report quantity is used for determining a ratio of a size of an output to a size of an input of the first encoder.

As an embodiment, the first report quantity is used for determining a compression rate of the first encoder.

As an embodiment, the first report quantity indicates a compression rate of the first encoder.

As an embodiment, the first report quantity is used for determining a size of the first compressed CSI.

As an embodiment, the first report quantity is used for determining a ratio of a size of the first compressed CSI to a size of the first pre-compressed CSI.

As an embodiment, the first report quantity is used for determining the first parameter.

As an embodiment, the first report quantity is used for determining the number of adaptation layers of the first encoder.

As an embodiment, the first report quantity indicates the number of adaptation layers of the first encoder.

As an embodiment, the first report quantity is used for determining a quantization level of the quantization.

As an embodiment, the first report quantity indicates a quantization level of the quantization.

As an embodiment, the first report quantity is used for determining a type of the quantization.

As an embodiment, the first report quantity is used for determining a puncturing rate of the puncturing.

As an embodiment, the first report quantity is used for determining a pattern of the puncturing.

As an embodiment, the first report quantity indicates a puncturing rate or a pattern of the puncturing.

**Embodiment 14**

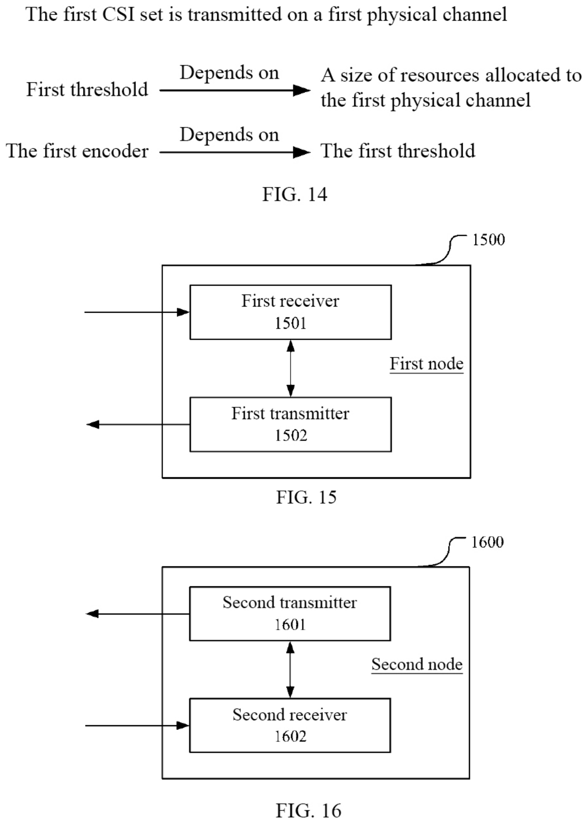

Embodiment 14 illustrates a schematic diagram of a first CSI set and a first threshold according to an embodiment of the present application, as shown in FIG. 14.

In embodiment 14, the first CSI set is transmitted on a first physical channel, a first threshold depends on a size of resources allocated to the first physical channel, and the first encoder depends on the first threshold.

As an embodiment, the first physical channel is a PUSCH.

As an embodiment, the first physical channel is a PUCCH.

As an embodiment, the first signaling comprises scheduling information of the first physical channel.

As an embodiment, the scheduling information comprises one or more of a time domain resource, a frequency domain resource, a Modulation and Coding Scheme (MCS), a Demodulation Reference Signal (DMRS) port, a Hybrid Automatic Repeat Request (HARQ) process number, a Redundancy Version (RV), a New Data Indicator (NDI), or a Transmission Configuration Indicator (TCI) state.

As an embodiment, the first signaling indicates resources allocated to the first physical channel.

As an embodiment, sizes of resources allocated to the first physical channel comprise: the number of OFDM symbols allocated to the first physical channel and the number of subcarriers allocated to the first physical channel.

As an embodiment, a third reference value depends on a payload size of the CSI for the first CSI report, and the first encoder makes the third reference value not greater than the first threshold.

As an embodiment, a third reference value depends on a payload size of second-type CSI for the first CSI report, and the first encoder makes the third reference value not greater than the first threshold; and the second-type CSI comprises the compressed CSI.

As an embodiment, the first encoder is one of a plurality of encoders, and any two encoders in the plurality of encoders generate different payload sizes of the CSI for the first CSI report; and the first encoder is an encoder with a largest payload size of the CSI for the first CSI report generated in encoders that make the third reference value not greater than the first threshold in the plurality of encoders.

As an embodiment, the first encoder is one of a plurality of encoders, and any two encoders in the plurality of encoders have different output sizes; and the first encoder is an encoder with a largest output size in encoders that make the third reference value not greater than the first threshold in the plurality of encoders.

As an embodiment, the first encoder is one of a plurality of encoders, and any two encoders in the plurality of encoders have different compression rates; and the first encoder is an encoder with a smallest compression rate in encoders that make the third reference value not greater than the first threshold in the plurality of encoders.

As an embodiment, the first encoder is one of a plurality of encoders, and any two encoders in the plurality of encoders have different compression rates; and the first encoder is an encoder with a largest compression rate in encoders that make the third reference value not greater than the first threshold in the plurality of encoders.

As an embodiment, the first encoder is one of a plurality of encoders, each encoder in the plurality of encoders performs quantization, and any two encoders in the plurality of encoders have different quantization levels; and the first encoder is an encoder with a largest quantization level in encoders that make the third reference value not greater than the first threshold in the plurality of encoders.

As an embodiment, the first encoder is one of a plurality of encoders, each encoder in the plurality of encoders performs puncturing, and any two encoders in the plurality of encoders have different puncturing rates; and the first encoder is an encoder with a smallest puncturing rate in encoders that make the third reference value not greater than the first threshold in the plurality of encoders.

As an embodiment, the payload size of the CSI/second-type CSI for the first CSI report refers to the number of bits comprised in the CSI/second-type CSI for the first CSI report.

As an embodiment, the second-type CSI is the compressed CSI.

As an embodiment, the second-type CSI further comprises other CSI except for the compressed CSI.

As an embodiment, the second-type CSI further comprises one or more of CQI, PMI, or a Layer Indicator (LI).

As an embodiment, the third reference value depends on the number of subcarriers and the number of Orthogonal Frequency Division Multiplex (OFDM) symbols allocated to the first physical channel.

As an embodiment, the first physical channel is a PUSCH, and the third reference value depends on a size of each Code Block (CB) carried by an Uplink Shared Channel (UL-SCH) corresponding to the first physical channel.

As an embodiment, the third reference value depends on a payload size of the CSI for the first CSI report, the number of subcarriers and the number of OFDM symbols allocated to the first physical channel, and the size of each CB carried by the UL-SCH corresponding to the first physical channel.

As an embodiment, the third reference value depends on a payload size of the second-type CSI for the first CSI report, the number of subcarriers and the number of OFDM symbols allocated to the first physical channel, and the size of each CB carried by the UL-SCH corresponding to the first physical channel.

As an embodiment, the third reference value is equal to the sum of a first payload size and a third integer multiplied by a first offset and then multiplied by a second value and rounded; the third integer is the number of Cyclic Redundancy Check (CRC) bits, and the third integer is a non-negative integer; and the first offset is a positive real number, and the second value depends on the number of subcarriers and the number of OFDM symbols allocated to the first physical channel and the size of each CB carried by the UL-SCH corresponding to the first physical channel.

As a sub-embodiment of the above embodiment, the first payload size is a payload size of the CSI for the first CSI report.

As a sub-embodiment of the above embodiment, the first payload size is a payload size of the second-type CSI for the first CSI report.

As an embodiment, the third reference value is

equal to $\left\lceil \dfrac{(O_1+L_1) \cdot \beta_{offset}^{PUSCH} \cdot \sum_{l=0}^{N_{symb,all}^{PUSCH}-1} M_{SC}^{UCI}(l)}{\sum_{r=0}^{C_{UL-SCH}-1} K_r} \right\rceil$ ,

wherein the $O_1$ is the first payload size, the $L_1$ is the third

integer, the $\beta_{offset}^{PUSCH}$ is the first offset, and the

$\dfrac{\sum_{l=0}^{N_{symb,all}^{PUSCH}-1} M_{SC}^{UCI}(l)}{\sum_{r=0}^{C_{UL-SCH}-1} K_r}$ is the second value.

As an embodiment, the $N_{symb,all}^{PUSCH}$ is the number of OFDM symbols allocated to the first physical channel or the number of OFDM symbols comprised in one nominal repetition of the first physical channel, the $M_{SC}^{UCI}(l)$ is the number of resource elements (REs) that can be used for transmitting Uplink Control Information (UCI) in an OFDM symbol $l$, the $C_{UL\text{-}SCH}$ is the number of CBs carried by the UL-SCH corresponding to the first physical channel, and the $K_r$ is a size of CB r carried by the UL-SCH corresponding to the first physical channel.

As an embodiment, when the OFDM symbol $l$ carries DeModulation Reference Signals (DMRS) of the first physical channel, the $M_{SC}^{UCI}(l)$ is equal to 0;when the OFDM symbol $l$ does not carry the DMRS of the first physical channel, the $M_{SC}^{UCI}(l)$ is equal to $M_{SC}^{PUSCH} - M_{SC}^{PT-RS}(l)$, wherein the $M_{SC}^{PUSCH}$ is the number of subcarriers allocated to the first physical channel, and the $M_{SC}^{PT-RS}(l)$ is the number of subcarriers carrying Phase-Tracking Reference Signal (PTRS) of the first physical channel in the OFDM symbol $l$.

As an embodiment, when the first payload size is greater than or equal to 360, the third integer is equal to 11.

As an embodiment, when the first payload size is less than 12, the third integer is equal to 0.

As an embodiment, when the first payload size is greater than or equal to 12 and less than or equal to 19, the third integer is equal to 6.

As an embodiment, when the first payload size is greater than or equal to 20, the third integer is equal to 11.

As an embodiment, the first offset is configured by a higher layer parameter.

As an embodiment, the first offset is configured by a higher layer parameter BetaOffsets.

As an embodiment, the first offset is indicated by Downlink Control Information (DCI).

As an embodiment, the first threshold is a positive integer greater than 1.

As an embodiment, the first threshold is determined by the first node itself.

As an embodiment, the first threshold depends on the number of subcarriers and the number of OFDM symbols allocated to the first physical channel.

As an embodiment, the first threshold depends on the number of bits comprised in the first-type UCI.

As an embodiment, the first threshold depends on the number of coded modulation symbols per layer for transmitting the first-type UCI.

As an embodiment, the first-type UCI is transmitted in the first physical channel.

As an embodiment, the first-type UCI comprises Hybrid Automatic Repeat Request-ACKnowledge (HARQ-ACK).

As an embodiment, the first-type UCI comprises a Configured Grant (CG)-UCI.

As an embodiment, the first-type UCI comprises first-type CSI, and the first-type CSI comprises one or more of a Rank Indicator (RI), a CSI-RS Resource Indicator (CRI), or a Channel Quality Indicator (CQI).

As an embodiment, the CSI for the first CSI report comprises the first-type CSI and the second-type CSI.

As an embodiment, the first report quantity belongs to the first-type CSI.

As an embodiment, the first threshold is linearly associated with the number of coded modulation symbols per layer for transmitting the first-type UCI, and a linear coefficient between the first threshold and the number of coded modulation symbols per layer for transmitting the first-type UCI is equal to -1.

As an embodiment, the first threshold is equal to

$\left\lceil \alpha \cdot \sum_{l=0}^{N_{symb,all}^{PUSCH}-1} M_{SC}^{UCI}(l) \right\rceil - Q'$, wherein the $\alpha$ is

a non-negative positive real number not greater than 1, and Q' is the number of coded modulation symbols per layer for transmitting the first-type UCI.

As an embodiment, the Q' depends on the number of bits comprised in the first-type UCI.

As an embodiment, the $\alpha$ is configured by a higher layer parameter.

As an embodiment, the $\alpha$ is configured by a higher layer parameter scaling.

As an embodiment, the first threshold is a minimum value in a second threshold and a third threshold; and both the second threshold and the third threshold depend on the number of subcarriers and the number of OFDM symbols allocated to the first physical channel,

and the number of coded modulation symbols per layer for transmitting the first-type UCI.

As an embodiment, the second threshold is

equal to $\left\lceil \alpha \cdot \sum_{l=0}^{N_{symb,all}^{PUSCH}-1} M_{SC}^{UCI}(l) \right\rceil - Q'$ , where-

in the $\alpha$ is a non-negative positive real number not greater than 1, and the Q' is the number of coded modulation symbols per layer for transmitting the first-type UCI.

As an embodiment, the third threshold is equal to $\sum_{l=0}^{N_{symb,actual}^{PUSCH}-1} M_{SC,actual}^{UCI}(l) - Q'$ , wherein

the $N_{symb,actual}^{PUSCH}$ is the number of OFDM symbols comprised in an actual repetition of the first physical channel, the $M_{SC,actual}^{UCI}(l)$ is the number of REs that can be used for transmitting UCI in OFDM symbol $l$, and the Q' is the number of coded modulation symbols per layer for transmitting the first-type UCI.

As an embodiment, when the OFDM symbol $l$ carries DMRS of actual transmission of the first physical channel, the $M_{SC,actual}^{UCI}(l)$ is equal to 0; and when the OFDM symbol $l$ does not carry the DMRS of actual transmission of the first physical channel, the

$M_{SC,actual}^{UCI}(l)$ is equal to

$M_{SC}^{PUSCH} - M_{SC,actual}^{PT-RS}(l)$ , wherein the

$M_{SC}^{PUSCH}$ is the number of subcarriers allocated to the first physical channel, and the $M_{SC,actual}^{PT-RS}(l)$ is

the number of subcarriers carrying PTRS of the first physical channel in the OFDM symbol $l$.

## Embodiment 15

Embodiment 15 illustrates a structural block diagram of a processing apparatus used in a first node according to an embodiment of the present application, as shown in FIG. 15. In FIG. 15, the processing apparatus 1500 in the first node comprises a first receiver 1501 and a first transmitter 1502.

As one embodiment, the first node is user equipment.

As an embodiment, the first node is a relay node.

As an embodiment, the first receiver 1501 comprises at least one of {an antenna 452, a receiving device 454, a receiving processor 456, a multi-antenna receiving processor 458, a controller/processor 459, a memory 460, and a data source 467} in embodiment 4.

As an embodiment, the first transmitter 1502 comprises at least one of {an antenna 452, a transmitting device 454, a transmitting processor 468, a multi-antenna transmitting processor 457, a controller/processor 459, a memory 460, and a data source 467} in embodiment 4.

The first receiver 1501 receives first signaling, wherein the first signaling is used for determining N CSI reports, N is a positive integer, and the N CSI reports comprise a first CSI report.

The first transmitter 1502 sends a first CSI set, wherein the first CSI set comprises CSI for the N CSI reports.

In embodiment 15, the first CSI report is used for determining a first RS resource set, measurement for the first RS resource set is used for determining first pre-compressed CSI, the first pre-compressed CSI is used as an input of a first encoder for generating CSI for the first CSI report, and a priority of the first CSI report depends on the first encoder.

As an embodiment, the first encoder satisfies at least one of the following:

a channel parameter recovered by a target recipient of the first CSI set based on an output of the first encoder is unknown to the first node;
a channel parameter recovered by the first node based on the output of the first encoder is unknown to the target recipient of the first CSI set;
at least part of parameters of the first encoder are obtained based on training; and
the output of the first encoder does not belong to the CSI defined in 3GPP Rel-17, nor does it belong to the CSI defined in releases prior to 3GPP Rel-17.

As an embodiment, a priority of the first CSI report depends on a first ID, and the first ID is associated with the first encoder.

As an embodiment, the first pre-compressed CSI is used as an input of the first encoder for generating first compressed CSI, and a priority of the first CSI report depends on a size of the first compressed CSI.

As an embodiment, a priority of the first CSI report depends on a first parameter, and the first parameter is associated with the first encoder.

As an embodiment, the CSI for the first CSI report comprises a first report quantity, and the first report quantity is used for determining a size of the CSI for the first CSI report.

As an embodiment, the first CSI set is transmitted on a first physical channel, a first threshold depends on a size of resources allocated to the first physical channel, and the first encoder depends on the first threshold.

## Embodiment 16

Embodiment 16 illustrates a structural block diagram of a processing apparatus used in a second node according to an embodiment of the present application, as shown in FIG. 16. In FIG. 16, the processing apparatus 1600 in the second node comprises a second transmitter 1601 and a second receiver 1602.

As an embodiment, the second node is a base station.

As one embodiment, the second node is user equipment.

As an embodiment, the second node is a relay node.

As an embodiment, the second transmitter 1601 comprises at least one of {an antenna 420, a transmitting device 418, a transmitting processor 416, a multi-antenna transmitting processor 471, a controller/-processor 475, and a memory 476} in embodiment 4.

As an embodiment, the second receiver 1602 comprises at least one of {an antenna 420, a receiving device 418, a receiving processor 470, a multi-antenna receiving processor 472, a controller/processor 475, and a memory 476} in embodiment 4.

The second transmitter 1601 sends first signaling, wherein the first signaling is used for determining N CSI reports, N is a positive integer, and the N CSI reports comprise a first CSI report.

The second receiver 1602 receives a first CSI set, wherein the first CSI set comprises CSI for the N CSI reports.

In embodiment 16, the first CSI report is used for determining a first RS resource set, measurement for the first RS resource set is used for determining first pre-compressed CSI, the first pre-compressed CSI is used as an input of a first encoder for generating CSI for the first CSI report, and a priority of the first CSI report depends on the first encoder.

As an embodiment, the first encoder satisfies at least one of the following:

> a channel parameter recovered by the second node based on an output of the first encoder is unknown to a sender of the first CSI set;
> a channel parameter recovered by the sender of the first CSI set based on the output of the first encoder is unknown to the second node;
> at least part of parameters of the first encoder are obtained based on training; and
> the output of the first encoder does not belong to the CSI defined in 3GPP Rel-17, nor does it belong to the CSI defined in releases prior to 3GPP Rel-17.

As an embodiment, a priority of the first CSI report depends on a first ID, and the first ID is associated with the first encoder.

As an embodiment, the first pre-compressed CSI is used as an input of the first encoder for generating first compressed CSI, and a priority of the first CSI report depends on a size of the first compressed CSI.

As an embodiment, a priority of the first CSI report depends on a first parameter, and the first parameter is associated with the first encoder.

As an embodiment, the CSI for the first CSI report comprises a first report quantity, and the first report quantity is used for determining a size of the CSI for the first CSI report.

As an embodiment, the first CSI set is transmitted on a first physical channel, a first threshold depends on a size of resources allocated to the first physical channel, and the first encoder depends on the first threshold.

Those ordinary skilled in the art can understand that all or part of the steps in the above method can be completed by instructing relevant hardware through a program, and the program can be stored in a computer-readable storage medium, such as a read-only memory, a hard disk or an optical disc. Optionally, all or part of the steps in the above embodiments can also be implemented using one or more integrated circuits. Accordingly, each module element in the above embodiments can be implemented in the form of hardware or implemented in the form of a software function module. The present application is not limited to any specific form of software and hardware combination. The user equipment, the terminals and the UE in the present application include but not limited to UAV, communication modules on UAV, remote-controlled aircraft, aircraft, small aircraft, mobile phones, tablet computers, laptops, vehicle-mounted communication devices, wireless sensors, Internet cards, Internet of Things terminals, Radio Frequency Identification (RFID) terminals, Narrow Band Internet of Things (NB-IOT) terminals, Machine Type Communication (MTC) terminals, enhanced MTC (eMTC) terminals, data cards, Internet cards, vehicle-mounted communication devices, low-cost mobile phones, low-cost tablet computers, and other wireless communication devices. The base stations or system devices in the present application comprise, but not limited to, the macro cell base station, the micro cell base station, the femtocell, a relay base station, NR Node B (gNB), a Transmitter Receiver Point (TRP), GNSS, a relay satellite, a satellite base station, an aerial base station, a Road Side Unit (RSU), UAV, the test device (such as a transceiver apparatus or a signaling tester that simulate part of functions of the base station) and other wireless communication devices.

The above only describes preferred embodiments of the present application and is not used for limiting the scope of protection of the present application. Any changes and modifications made based on the embodiments described in the specification, if similar partial or full technical effects can be obtained, should be deemed obvious and belong to the scope of protection of the present invention.

**Claims**

1. A first node used for wireless communication, comprising:

a first receiver receiving first signaling, wherein the first signaling is used for determining N CSI reports, N is a positive integer, and the N CSI reports comprise a first CSI report; and
a first transmitter sending a first CSI set, wherein the first CSI set comprises CSI for the N CSI reports;
wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

2. The first node according to claim 1, wherein the first encoder satisfies at least one of the following:

   a channel parameter recovered by a target recipient of the first CSI set based on an output of the first encoder is unknown to the first node;
   a channel parameter recovered by the first node based on the output of the first encoder is unknown to the target recipient of the first CSI set;
   at least part of parameters of the first encoder are obtained based on training; and
   the output of the first encoder does not belong to the CSI defined in 3GPP Rel-17, nor does it belong to the CSI defined in releases prior to 3GPP Rel-17.

3. The first node according to claim 1 or 2, wherein the priority of the first CSI report depends on a first ID, and the first ID is associated with the first encoder.

4. The first node according to any one of claims 1 to 3, wherein the first pre-compressed CSI serves as the input of the first encoder and is used for generating first compressed CSI, and the priority of the first CSI report depends on a size of the first compressed CSI.

5. The first node according to any one of claims 1 to 4, wherein the priority of the first CSI report depends on a first parameter, and the first parameter is associated with the first encoder.

6. The first node according to any one of claims 1 to 5, wherein the CSI for the first CSI report comprises a first report quantity, and the first report quantity is used for determining a size of the CSI for the first CSI report.

7. The first node according to any one of claims 1 to 6, wherein the first CSI set is transmitted on a first physical channel, a first threshold depends on a size of resources allocated to the first physical channel, and the first encoder depends on the first threshold.

8. A second node for wireless communication, comprising:

   a second transmitter sending first signaling, wherein the first signaling is used for determining N CSI reports, N is a positive integer, and the N CSI reports comprise a first CSI report; and
   a second receiver receiving a first CSI set, wherein the first CSI set comprises CSI for the N CSI reports;
   wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

9. The second node according to claim 8, wherein the first encoder satisfies at least one of the following:

   a channel parameter recovered by the second node based on an output of the first encoder is unknown to a sender of the first CSI set;
   a channel parameter recovered by the sender of the first CSI set based on the output of the first encoder is unknown to the second node;
   at least part of parameters of the first encoder are obtained based on training; and
   the output of the first encoder does not belong to the CSI defined in 3GPP Rel-17, nor does it belong to the CSI defined in releases prior to 3GPP Rel-17.

10. The second node according to claim 8 or 9, wherein the priority of the first CSI report depends on a first ID, and the first ID is associated with the first encoder.

11. The second node according to any one of claims 8 to 10, wherein the first pre-compressed CSI serves as the input of the first encoder and is used for generating first compressed CSI, and the priority of the first CSI report depends on a size of the first compressed CSI.

12. The second node according to any one of claims 8 to 11, wherein the priority of the first CSI report depends on a first parameter, and the first parameter is associated with the first encoder.

13. The second node according to any one of claims 8 to 12, wherein the CSI for the first CSI report comprises a first report quantity, and the first report quantity is used for determining a size of the CSI for the first CSI report.

14. The second node according to any one of claims 8 to 13, wherein the first CSI set is transmitted on a first physical channel, a first threshold depends on a size of resources allocated to the first physical channel, and the first encoder depends on the first threshold.

15. A method used in a first node for wireless communication, comprising:

   receiving first signaling, wherein the first signaling is used for determining N CSI reports, N is a positive integer, and the N CSI reports comprise a first CSI report; and
   sending a first CSI set, wherein the first CSI set comprises CSI for the N CSI reports;
   wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

16. The method in a first node according to claim 15, wherein the first encoder satisfies at least one of the following:

   a channel parameter recovered by a target recipient of the first CSI set based on an output of the first encoder is unknown to the first node;
   a channel parameter recovered by the first node based on the output of the first encoder is unknown to the target recipient of the first CSI set;
   at least part of parameters of the first encoder are obtained based on training; and
   the output of the first encoder does not belong to the CSI defined in 3GPP Rel-17, nor does it belong to the CSI defined in releases prior to 3GPP Rel-17.

17. The method in a first node according to claim 15 or 16, wherein the priority of the first CSI report depends on a first ID, and the first ID is associated with the first encoder.

18. The method in a first node according to any one of claims 15 to 17, wherein the first pre-compressed CSI serves as the input of the first encoder and is used for generating first compressed CSI, and the priority of the first CSI report depends on a size of the first compressed CSI.

19. The method in a first node according to any one of claims 15 to 18, wherein the priority of the first CSI report depends on a first parameter, and the first parameter is associated with the first encoder.

20. The method in a first node according to any one of claims 15 to 19, wherein the CSI for the first CSI report comprises a first report quantity, and the first report quantity is used for determining a size of the CSI for the first CSI report.

21. The method in a first node according to any one of claims 15 to 20, wherein the first CSI set is transmitted on a first physical channel, a first threshold depends on a size of resources allocated to the first physical channel, and the first encoder depends on the first threshold.

22. A method used in a second node for wireless communication, comprising:

   sending first signaling, wherein the first signaling is used for determining N CSI reports, N is a positive integer, and the N CSI reports comprise a first CSI report; and
   receiving a first CSI set, wherein the first CSI set comprises CSI for the N CSI reports;
   wherein the first CSI report is used for determining a first RS resource set, a measurement for the first RS resource set is used for determining first pre-compressed CSI, the first pre-compressed CSI serves as an input of a first encoder and is used for generating CSI for the first CSI report, and a priority of the first CSI report depends on the first encoder.

23. The method in a second node according to claim 22, wherein the first encoder satisfies at least one of the following:

   a channel parameter recovered by the second node based on an output of the first encoder is unknown to a sender of the first CSI set;
   a channel parameter recovered by the sender of the first CSI set based on the output of the first encoder is unknown to the second node;
   at least part of parameters of the first encoder are obtained based on training; and
   the output of the first encoder does not belong to the CSI defined in 3GPP Rel-17, nor does it belong to the CSI defined in releases prior to 3GPP Rel-17.

24. The method in a second node according to claim 22 or 23, wherein the priority of the first CSI report depends on a first ID, and the first ID is associated with the first encoder.

25. The method in a second node according to any one of claims 22 to 24, wherein the first pre-compressed CSI serves as the input of the first encoder and is used for generating first compressed CSI, and the priority of the first CSI report depends on a size of the first compressed CSI.

26. The method in a second node according to any one of claims 22 to 25, wherein the priority of the first CSI report depends on a first parameter, and the first parameter is associated with the first encoder.

27. The method in a second node according to any one of claims 22 to 26, wherein the CSI for the first CSI report comprises a first report quantity, and the first report quantity is used for determining a size of the CSI for the first CSI report.

28. The method in a second node according to any one of claims 22 to 27, wherein the first CSI set is transmitted on a first physical channel, a first threshold depends on a size of resources allocated to the first physical channel, and the first encoder depends on the first threshold.

100

First node

Receiving first signaling                          101

Sending first CSI set                              102

FIG. 1

5GS/EPS 200

FIG. 2

Control plane 300

User plane 350

FIG. 3

## FIG. 4

**410**

**416** Transmitting processor
**471** Multi-antenna transmitting processor
**420** / **418** Transmitting device / Receiving device
**452** / **454** Transmitting device / Receiving device
**457** Multi-antenna transmitting processor
**468** Transmitting processor
**450**

**475** Controller/ processor
**476** Memory
**459** Controller/ processor
**460** Memory
**467** Data source

**470** Receiving processor
**472** Multi-antenna receiving processor
**418** Transmitting device / Receiving device
**454** Transmitting device / Receiving device
**458** Multi-antenna receiving processor
**456** Receiving processor

FIG. 4

## FIG. 5

N02. Second node — U01. First node

S5201. Sending first signaling → First signaling → S5101. Receiving first signaling

F51. Optional:
S5202. Sending RS in a first RS resource set → RS → S5102. Receiving RS in a first RS resource set

S5103. Sending first CSI set

First CSI set ← S5203. Receiving a first CSI set

End — End

FIG. 5

EP 4 727 045 A1

The first encoder satisfies at least one of the following

{
A channel parameter recovered by a target recipient of the first CSI set based on an output of the first encoder is unknown to the first node

A channel parameter recovered by the first node based on an output of the first encoder is unknown to a target recipient of the first CSI set

At least part of parameters of the first encoder are obtained based on training

An output of the first encoder does not belong to CSI defined in 3GPP Rel-17, nor does it belong to CSI defined in releases prior to 3GPP Rel-17
}

FIG. 6

Second-type feedback (optional)

Second processor —First dataset→ Third processor

Target first-type parameter set

First-type feedback (optional)

Second processor —Second dataset→ Fourth processor —First-type output→ Fifth processor

FIG. 7

A priority of the first CSI report —Depends on→ First ID

The first ID is associated with the first encoder

FIG. 8

First value —Depends on→ At least one of a second parameter, a third parameter, a fourth parameter, a fifth parameter or a sixth parameter

A priority of the first CSI report —Depends on→ The first value

The second parameter —Depends on→ The first encoder

The third parameter, the fourth parameter, the fifth parameter and the sixth parameter —Respectively Depend on→ A time domain characteristic, a report quantity, a cell index and CSI-ReportConfigId of the first CSI report

FIG.9

40

First pre-compressed CSI ⟶ | First encoder | ⟶ First compressed CSI

A priority of the first CSI report $\xrightarrow{\text{Depends on}}$ A size of the first compressed CSI

FIG.10

A priority of the first CSI report $\xrightarrow{\text{Depends on}}$ First parameter

The first parameter is associated with the first encoder

FIG. 11

First encoder

Adaptation layer #1

⋮

Adaptation layer #L

FIG. 12

CSI for first CSI report $\xrightarrow{\text{Comprises}}$ A first report quantity

The first report quantity $\xrightarrow[\text{determining}]{\text{Is used for}}$ A size of CSI for first CSI report

FIG. 13

The first CSI set is transmitted on a first physical channel

First threshold $\xrightarrow{\text{Depends on}}$ A size of resources allocated to the first physical channel

The first encoder $\xrightarrow{\text{Depends on}}$ The first threshold

FIG. 14

1500

First receiver
1501

First node

First transmitter
1502

FIG. 15

1600

Second transmitter
1601

Second node

Second receiver
1602

FIG. 16

## INTERNATIONAL SEARCH REPORT

| International application No. |
|---|
| **PCT/CN2024/095923** |

**A.   CLASSIFICATION OF SUBJECT MATTER**

H04L 1/06(2006.01)i

According to International Patent Classification (IPC) or to both national classification and IPC

**B.   FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, 3GPP: 信道状态信息, 优先级, 编码, 压缩, 有关, 相关, 依赖, CSI, Channel State Information, Priority, Encoding, Compression, Related, Dependent

**C.   DOCUMENTS CONSIDERED TO BE RELEVANT**

| Category* | Citation of document, with indication, where appropriate, of the relevant passages | Relevant to claim No. |
|---|---|---|
| A | CN 115967418 A (SHANGHAI LANGBO COMMUNICATION TECHNOLOGY CO., LTD.) 14 April 2023 (2023-04-14) claims 1-10, and description, paragraphs [0082]-[0244], [0287]-[0325] and [0460]-[0553] | 1-28 |
| A | CN 116015378 A (ZTE CORP.) 25 April 2023 (2023-04-25) entire document | 1-28 |
| A | CN 110351768 A (VIVO COMMUNICATION TECHNOLOGY CO., LTD.) 18 October 2019 (2019-10-18) entire document | 1-28 |
| A | US 2021226682 A1 (LG ELECTRONICS INC.) 22 July 2021 (2021-07-22) entire document | 1-28 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 August 2024** | **28 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/095923**

| Patent document cited in search report | | | Publication date (day/month/year) | Patent family member(s) | | | Publication date (day/month/year) |
|---|---|---|---|---|---|---|---|
| CN | 115967418 | A | 14 April 2023 | None | | | |
| CN | 116015378 | A | 25 April 2023 | None | | | |
| CN | 110351768 | A | 18 October 2019 | EP | 3780442 | A1 | 17 February 2021 |
| | | | | EP | 3780442 | A4 | 05 May 2021 |
| | | | | US | 2021021315 | A1 | 21 January 2021 |
| | | | | US | 11637604 | B2 | 25 April 2023 |
| | | | | WO | 2019192471 | A1 | 10 October 2019 |
| | | | | KR | 20200138378 | A | 09 December 2020 |
| | | | | JP | 2021517783 | A | 26 July 2021 |
| | | | | JP | 7245848 | B2 | 24 March 2023 |
| US | 2021226682 | A1 | 22 July 2021 | WO | 2020005004 | A1 | 02 January 2020 |

Form PCT/ISA/210 (patent family annex) (July 2022)